(19) Europäisches Patentamt / European Patent Office / Office européen des brevets

(11) **EP 4 120 041 B1**

(12) **EUROPEAN PATENT SPECIFICATION**

(45) Date of publication and mention
of the grant of the patent:
**05.11.2025 Bulletin 2025/45**

(21) Application number: **21780830.2**

(22) Date of filing: **05.03.2021**

(51) International Patent Classification (IPC):
**G05D 1/00** (2024.01)     **B60W 30/095** (2012.01)
**G08G 1/16** (2006.01)

(52) Cooperative Patent Classification (CPC):
**G05D 1/0214; B60W 30/09; B60W 30/0956;
B60W 60/0015; G01C 21/3461; G08G 1/166;**
B60W 2554/4041; B60W 2554/4042;
B60W 2554/4044; B60W 2554/802; B60W 2554/804

(86) International application number:
**PCT/CN2021/079356**

(87) International publication number:
**WO 2021/196977 (07.10.2021 Gazette 2021/40)**

(54) **PATH PLANNING METHOD AND DEVICE, CONTROLLER, AND MOVING OBJECT**

WEGPLANUNGSVERFAHREN UND -VORRICHTUNG, STEUERUNG UND BEWEGLICHES OBJEKT

PROCÉDÉ ET DISPOSITIF DE PLANIFICATION DE TRAJET, DISPOSITIF DE COMMANDE ET OBJET MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2020  CN 202010245937**

(43) Date of publication of application:
**18.01.2023  Bulletin 2023/03**

(73) Proprietor: **Shenzhen Yinwang Intelligent Technologies Co., Ltd.**
**Shenzhen City, Guangdong 518129 (CN)**

(72) Inventors:
• **HUANG, Ziliang**
**Shenzhen, Guangdong 518129 (CN)**
• **ZHENG, Yonghao**
**Shenzhen, Guangdong 518129 (CN)**
• **PENG, Fan**
**Shenzhen, Guangdong 518129 (CN)**

(74) Representative: **Gill Jennings & Every LLP**
**The Broadgate Tower**
**20 Primrose Street**
**London EC2A 2ES (GB)**

(56) References cited:
CN-A- 105 526 942     CN-A- 109 318 890
CN-A- 110 531 762     CN-A- 110 906 934
CN-A- 110 908 373     JP-A- 2007 055 480
US-A1- 2019 361 452

• LIN ZIJIE ET AL: "Fast 3D Collision Avoidance Algorithm for Fixed Wing UAS", JOURNAL OF INTELLIGENT, SPRINGER NETHERLANDS, DORDRECHT, vol. 97, no. 3-4, 29 June 2019 (2019-06-29), pages 577 - 604, XP037043201, ISSN: 0921-0296, [retrieved on 20190629], DOI: 10.1007/S10846-019-01037-7
• GU XINPING ET AL: "Intelligent Vehicle Path Planning Based on Improved Artificial Potential Field Algorithm", 2019 INTERNATIONAL CONFERENCE ON HIGH PERFORMANCE BIG DATA AND INTELLIGENT SYSTEMS (HPBD&IS), IEEE, 9 May 2019 (2019-05-09), pages 104 - 109, XP033560822, ISBN: 978-1-7281-0466-9, [retrieved on 20190611], DOI: 10.1109/HPBDIS.2019.8735451

• **TIANYU SHI ET AL: "Research on Control Method and Evaluation System of Ground Unmanned Vehicle Formation Transform", ARXIV.ORG, CORNELL UNIVERSITY LIBRARY, 201 OLIN LIBRARY CORNELL UNIVERSITY ITHACA, NY 14853, 5 August 2018 (2018-08-05), XP081097715**

**Description**

## TECHNICAL FIELD

This application relates to the field of autonomous driving, and in particular, to a method and an apparatus for path planning, a controller, and a mobile object.

## BACKGROUND

Automated driving system (automated driving system, ADS) technology is a process in which a sensing system of a mobile object senses information about a surrounding environment, decision and planning of a traveling path are made based on the sensed information, and the mobile object controls itself to complete driving autonomously based on the planned traveling path. For example, current automated driving technologies may be applied to an intelligent vehicle (smart/intelligent car). An onboard sensing system of the vehicle senses a road environment, and then a vehicle control system plans a traveling path, and controls itself to implement autonomous driving based on the planned traveling path.

In the foregoing autonomous driving process, the onboard sensing system of the vehicle senses the road environment to obtain a location of each obstacle on the road, and the path planned by the vehicle based on the location of the obstacle and a location of the vehicle bypasses the obstacle. The vehicle travels along the path. However, in the conventional method for path planning, the path is planned only based on the locations of the vehicle and the obstacle from the perspective of obstacle avoidance. Although the safety of a driver and the vehicle is ensured, a driving process of the vehicle cannot proceed smoothly due to a single factor consideration, which affects driving experience of the driver.

LIN ZIJIE ET AL: "Fast 3D Collision Avoidance Algorithm for Fixed Wing UAS", JOURNAL OF INTELLIGENT, SPRINGER NETHERLANDS, DORDRECHT, vol. 97, no. 3-4, 29 June 2019 (2019-06-29), pages 577-604 discloses an efficient 3D collision avoidance algorithm for fixed wing Unmanned Aerial Systems (UAS).

GU XINPING ET AL: "Intelligent Vehicle Path Planning Based on Improved Artificial Potential Field Algorithm", 2019 INTERNATIONAL CONFERENCE ON HIGH PERFORMANCE BIG DATA AND INTELLIGENT SYSTEMS (HPBD&IS), IEEE, 9 May 2019 (2019-05-09), pages 104-109 describes the goal unreachable problem and local minimum point problem that appear when the traditional artificial potential field (APF) method is used for intelligent vehicle path planning. TIANYU SHI ET AL: "Research on Control Method and Evaluation System of Ground Unmanned Vehicle Formation Transform", ARXIVORG, CORNELL UNIVERSITY LIBRARY, 201 OLINE LIBRARY CORNELL UNIVERSITY ITHACA, NY 14853, discloses a formation control system for unmanned ground vehicles (UGV) from the perspective of path planning and path tracking.

## SUMMARY

This application provides a method and an apparatus for path planning, a controller, and a mobile object, so as to improve driving experience. The technical solutions are as follows.

In a first aspect of the present invention there is provided a method for path planning according to claim 1. In a second aspect of the present invention there is provided an apparatus for path planning according to claim 3.

According to a first aspect, an embodiment of this application provides a method for path planning. In the method, a location of an obstacle around a mobile object and motion attribute information are obtained, where the motion attribute information is used to describe an attribute and a motion state of the obstacle and a motion state of the mobile object; a repulsion ring coefficient of the obstacle is determined based on the location of the obstacle and the motion attribute information, where the repulsion ring coefficient is used to identify a hazard level of a collision between the mobile object and the obstacle; and a traveling path for the mobile object in a first section is planned based on the repulsion ring coefficient. The repulsion ring coefficient of the obstacle is obtained based on the location of the obstacle and the motion attribute information, and then the traveling path is planned based on the repulsion ring coefficient. Therefore, not only the location but also the motion attribute information are considered when the traveling path is planned, which makes the planned traveling path smoother, and enables smooth driving based on the planned traveling path, thereby improving driving experience.

In the first aspect, the repulsion ring coefficient includes a repulsion ring range coefficient and a repulsion coefficient. The repulsion ring range coefficient is used to identify the extent of impact of the obstacle on the hazard level, and the repulsion coefficient is used to identify the extent of impact of the motion state of the mobile object and the motion state of the obstacle on the hazard level. As such, the traveling path planned based on the repulsion ring range coefficient and the repulsion coefficient can bypass an obstacle with a relatively high hazard level in advance, thereby improving driving safety.

In the first aspect, the motion attribute information includes a velocity, an acceleration, and a motion direction of the mobile object, and one or more of a velocity, an acceleration, and a motion direction of the obstacle. A distance between the mobile object and the obstacle is obtained based on a location of the mobile object and the location of the obstacle. At least one relative motion parameter is obtained based on the motion attribute information, where the at least one relative motion parameter includes one or more of a relative velocity, a relative acceleration, and an angle of the collision between the mobile object and the obstacle, and the angle of the collision is an included angle between the motion direction of the mobile object and the motion direction of the obstacle. The repulsion coefficient is obtained based on the at least one relative motion parameter and the distance. Because the repulsion coefficient is obtained based on the at least one relative motion parameter and the distance, more factors are considered in the planning of the traveling path by introducing the repulsion coefficient, and a smoother traveling path is obtained. In addition, because different relative motion parameters and distances produce different hazard levels of the collision between the mobile object and the obstacle, the traveling path planned based on the repulsion coefficient is more reasonable and safer, thereby improving driving safety.

In the first aspect, the repulsion coefficient includes a repulsion velocity coefficient and a repulsion acceleration coefficient. The repulsion velocity coefficient is used to describe the extent of impact of the velocity of the mobile object and the velocity of the obstacle on the hazard level, and the repulsion acceleration coefficient is used to describe the extent of impact of the acceleration of the mobile object and the acceleration of the obstacle on the hazard level. The repulsion velocity coefficient is obtained based on the relative velocity and a first parameter, where the first parameter includes one or more of the distance, a magnitude of momentum of the obstacle, and the angle of the collision; and the repulsion acceleration coefficient is obtained based on the relative acceleration and a second parameter, where the second parameter includes one or more of the distance, the magnitude of the momentum of the obstacle, and the angle of the collision. Because the repulsion velocity coefficient is obtained based on the relative velocity and the first parameter, and the repulsion acceleration coefficient is obtained based on the relative acceleration and the second parameter, more factors are considered in the planning of the traveling path by introducing the repulsion velocity coefficient and the repulsion acceleration coefficient, a smoother traveling path is obtained, and the planned traveling path is more reasonable and safer, thereby improving driving safety.

In another possible implementation, the motion attribute information includes a type of the obstacle, and the repulsion ring range coefficient of the obstacle is obtained from a correspondence between the type and the repulsion ring range coefficient based on the type. Different types of obstacles correspond to different repulsion ring range coefficients. The type of the obstacle is considered when the traveling path is planned. Collisions between the mobile object and different types of obstacles produce different hazard levels. As such, the traveling path planned by introducing the repulsion ring range coefficient is more reasonable and safer, improving driving safety.

In the first aspect, a first turning radius for the mobile object to bypass a hazardous obstacle is determined based on the repulsion ring coefficient, where the hazardous obstacle is an obstacle with which the mobile object is to collide when the mobile object continues moving in the motion state of the mobile object. The traveling path for the mobile object in the first section is planned based on the first turning radius. Because the repulsion ring coefficient is used to identify the hazard level of the collision between the mobile object and the obstacle, the first turning radius obtained by introducing the repulsion ring coefficient is more reasonable, and the traveling path planned based on the first turning radius is safer.

In the first aspect, a repulsion ring size parameter of the obstacle is obtained based on the repulsion ring range coefficient included in the repulsion ring coefficient; a magnitude of a repulsive force and a magnitude of repulsion field potential energy produced by the obstacle to the mobile object are obtained based on the repulsion coefficient included in the repulsion ring coefficient and the repulsion ring size parameter; and the first turning radius for the mobile object to bypass the hazardous obstacle is determined based on the magnitude of the repulsive force and the magnitude of the repulsion field potential energy. Because the magnitude of the repulsive force and the magnitude of the repulsion field potential energy produced by the obstacle to the mobile object are obtained by introducing the repulsion ring range coefficient and the repulsion coefficient, the magnitude of the repulsive force and the magnitude of the repulsion field potential energy are obtained with higher accuracy, and the first turning radius is more reasonable. As such, the traveling path planned based on the first turning radius is safer.

In the first aspect, the repulsion ring size parameter of the obstacle is obtained according to the following formula:

$$\rho_o = (1+K_l)(1+K_m)\rho_r$$

In the above formula, $\rho_o$ is the repulsion ring size parameter of the obstacle, $K_l$ is a life value coefficient included in the repulsion ring range coefficient, $K_m$ is a property value coefficient included in the repulsion ring range coefficient, and $\rho_r$ is a specified repulsion ring size parameter. In this way, the repulsion ring size parameter of the obstacle is obtained based on the repulsion ring range coefficient.

In the first aspect, the magnitude of the repulsive force produced by the obstacle to the mobile object is determined according to the following formula:

$$F_{req}(q) = \begin{cases} \dfrac{\eta}{\rho^2(q,q_{obs})} \cdot \left( \dfrac{1}{\rho(q,q_{obs})} - \dfrac{1}{\rho_o} \right) + K_v v_r + K_a a_r, & \rho(q,q_{obs}) \leq \rho_o \\ 0 \quad, & \rho(q,q_{obs}) > \rho_o \end{cases}$$

In the above formula, $F_{eq}(q)$ is the magnitude of the repulsive force produced by the obstacle to the mobile object, $q$ is the location of the mobile object, $q_{obs}$ is the location of the obstacle, $\rho(q,q_{obs})$ is the distance between the obstacle and the mobile object, $K_v$ is the repulsion velocity coefficient included in the repulsion coefficient, $v_r$ is the velocity of the obstacle, $K_a$ is the repulsion acceleration coefficient included in the repulsion coefficient, $a_r$ is the acceleration of the obstacle, $\eta$ is a repulsion location gain coefficient, and $\rho_o$ is the repulsion ring size parameter of the obstacle. Because the repulsion velocity coefficient, the repulsion acceleration coefficient, and the velocity and the acceleration of the obstacle are introduced when the magnitude of the repulsive force is calculated according to the above formula, more factors are considered when the magnitude of the repulsive force is calculated, making the calculated magnitude of the repulsive force more accurate.

In the first aspect, the magnitude of the repulsion field potential energy produced by the obstacle to the mobile object is determined according to the following formula:

$$U_{req}(q) = \begin{cases} \dfrac{1}{2}\eta \left( \dfrac{1}{\rho(q,q_{obs})} - \dfrac{1}{\rho_o} \right)^2 + \dfrac{1}{2}K_v v_r^2 + \dfrac{1}{2}K_a a_r^2, & \rho(q,q_{obs}) \leq \rho_o \\ 0 \quad, & \rho(q,q_{obs}) > \rho_o \end{cases}$$

In the above formula, $U_{req}(q)$ is the magnitude of the repulsion field potential energy produced by the obstacle to the mobile object, $q$ is the location of the mobile object, $q_{obs}$ is the location of the obstacle, $\rho(q,q_{obs})$ is the distance between the obstacle and the mobile object, $K_v$ is the repulsion velocity coefficient included in the repulsion coefficient, $v_r$ is the velocity of the obstacle, $K_a$ is the repulsion acceleration coefficient included in the repulsion coefficient, $a_r$ is the acceleration of the obstacle, $\eta$ is a repulsion location gain coefficient, and $\rho_o$ is the repulsion ring size parameter of the obstacle. Because the repulsion velocity coefficient, the repulsion acceleration coefficient, and the velocity and the acceleration of the obstacle are introduced when the magnitude of the repulsion field potential energy is calculated according to the above formula, more factors are considered when the magnitude of the repulsion field potential energy is calculated, making the calculated magnitude of the repulsion field potential energy more accurate.

In another possible implementation, the mobile object is a vehicle, and a minimum turning radius of the vehicle is determined based on a velocity of the vehicle. A second turning radius for the mobile object to bypass the hazardous obstacle is determined based on the repulsion ring coefficient. When the second turning radius is greater than or equal to the minimum turning radius, the second turning radius is determined as the first turning radius; or when the second turning radius is less than the minimum turning radius, the minimum turning radius is determined as the first turning radius. As such, the minimum turning radius with which the vehicle can turn is considered when the traveling path is planned, thereby making the planned traveling path smoother and further improving driving safety.

According to a second aspect, this application provides an apparatus for path planning, configured to perform the method in any one of the first aspect or the possible implementations of the first aspect. Specifically, the apparatus includes a unit for performing the method in any one of the first aspect or the possible implementations of the first aspect.

According to a third aspect, this application provides an apparatus for path planning, including: a processor, a memory, and a communications interface. The processor, the memory, and the communications interface may be connected by using a bus system. The memory is configured to store one or more programs. The processor is configured to execute the one or more programs in the memory to cause the apparatus to complete the method in any one of the first aspect or the possible implementations of the first aspect.

According to a fourth aspect, this application provides a controller, including a processor and a memory. The memory is configured to store one or more programs. The processor is configured to execute the one or more programs in the memory to cause the controller to complete the method in any one of the first aspect or the possible implementations of the first aspect.

According to a fifth aspect, this application provides a mobile object. The mobile object includes the apparatus according to the second aspect, the apparatus according to the third aspect, or the controller according to the fourth aspect.

According to a sixth aspect, this application provides a computer-readable storage medium. The computer-readable storage medium stores program code that, when executed on a computer, causes the computer to perform the method in any one of the first aspect or the possible implementations of the first aspect.

According to a seventh aspect, this application provides a computer program product including program code that, when executed on a computer, causes the computer to perform the method in any one of the first aspect or the possible implementations of the first aspect.

According to an eighth aspect, this application provides a chip, including a storage component and a processing component. The storage component is configured to store computer instructions. The processing component is configured to invoke the computer instructions from the storage component and execute the computer instructions, to perform the method in any one of the first aspect or the possible implementations of the first aspect.

According to a ninth aspect, this application provides a system for path planning, including a controller, a positioning system, and a sensing system. The controller obtains a location of an obstacle around a mobile object and motion attribute information by using the positioning system and the sensing system, where the motion attribute information is used to describe an attribute and a motion state of the obstacle and a motion state of the mobile object; a repulsion ring coefficient of the obstacle is determined based on the location of the obstacle and the motion attribute information, where the repulsion ring coefficient is used to identify a hazard level of a collision between the mobile object and the obstacle; and a traveling path for the mobile object in a first section is planned based on the repulsion ring coefficient. The repulsion ring coefficient of the obstacle is obtained based on the location of the obstacle and the motion attribute information, and then the traveling path is planned based on the repulsion ring coefficient. Therefore, not only the location but also the motion attribute information are considered when the traveling path is planned, which makes the planned traveling path smoother, and enables smooth driving based on the planned traveling path, thereby improving driving experience.

## BRIEF DESCRIPTION OF DRAWINGS

FIG. 1 is a schematic diagram of a repulsion ring according to an embodiment of this application;

FIG. 2 is a schematic diagram of an application scenario according to an embodiment of this application;

FIG. 3 is a schematic diagram of a resultant force produced by a target location and an obstacle to a mobile object according to an embodiment of this application;

FIG. 4 is a schematic diagram of a structure of a mobile object according to an embodiment of this application;

FIG. 5 is a flowchart of a method for path planning according to an embodiment of this application;

FIG. 6 is a schematic diagram of distribution of obstacles around a mobile object according to an embodiment of this application;

FIG. 7 is a schematic diagram of motion directions of a mobile object and an obstacle according to an embodiment of this application;

FIG. 8 is a schematic diagram of a correspondence among a distance hazard level, a velocity hazard level, a momentum hazard level, and a first overall level according to an embodiment of this application;

FIG. 9 is a schematic diagram of a correspondence among an angle hazard level, a first overall level, and a repulsion velocity coefficient level according to an embodiment of this application;

FIG. 10 is a schematic diagram of a correspondence among a distance hazard level, an acceleration hazard level, a momentum hazard level, and a second overall level according to an embodiment of this application;

FIG. 11 is a schematic diagram of a correspondence among an angle hazard level, a second overall level, and a repulsion acceleration coefficient level according to an embodiment of this application;

FIG. 12 is a schematic diagram of distribution of hazardous obstacles around a mobile object according to an embodiment of this application;

FIG. 13 is a schematic diagram of distribution of hazardous obstacles around another mobile object according to an embodiment of this application;

FIG. 14 is a schematic diagram of a structure of an apparatus for path planning according to an embodiment of this application; and

FIG. 15 is a schematic diagram of a structure of another apparatus for path planning according to an embodiment of this application.

## DETAILED DESCRIPTION OF EMBODIMENTS

A method for path planning provided in this application is described in detail below with reference to the accompanying drawings.

For a better understanding of the technical solution of this application, concepts involved in this application are first described briefly.

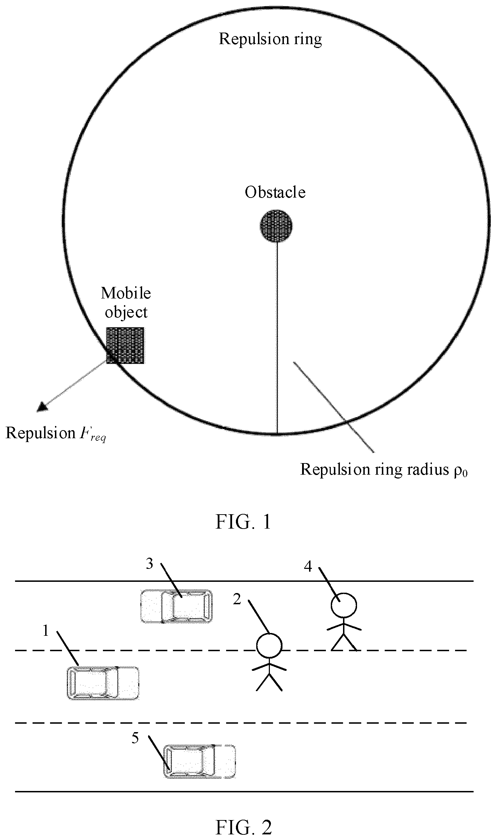

A repulsion ring of an obstacle is an action range of a repulsive force from the obstacle. The repulsion ring is centered at a location of the obstacle. The repulsion ring of the obstacle may be a circular range, an elliptical range, a rectangular range, or the like. Referring to FIG. 1, it is assumed that a repulsion ring of an obstacle is a circular range, and that a radius of the repulsion ring may be denoted as $\rho_0$; the repulsion ring of the obstacle is a range centered at a location of the obstacle and having the radius $\rho_0$. The obstacle produces a repulsive force to a mobile object that moves into the repulsion ring of the obstacle, while the obstacle does not produce a repulsive force to a mobile object outside the repulsion ring of the obstacle. Within the repulsion ring of the obstacle, the closer the mobile object is to the obstacle, the greater the repulsive force produced by the obstacle to the mobile object.

Optionally, the mobile object is a vehicle (for example, an intelligent vehicle), an unmanned aerial vehicle, a logistics trolley or mobile robot equipped with an optical automated guided vehicle (automated guided vehicle, AGV), or the like.

Next, an application scenario of this application is further described with reference to the accompanying drawings. Referring to FIG. 2, this application is applied to an autonomous driving scenario, which includes a mobile object 1 and obstacles (such as obstacles 2, 3, 4, and 5 in FIG. 2) around the mobile object 1.

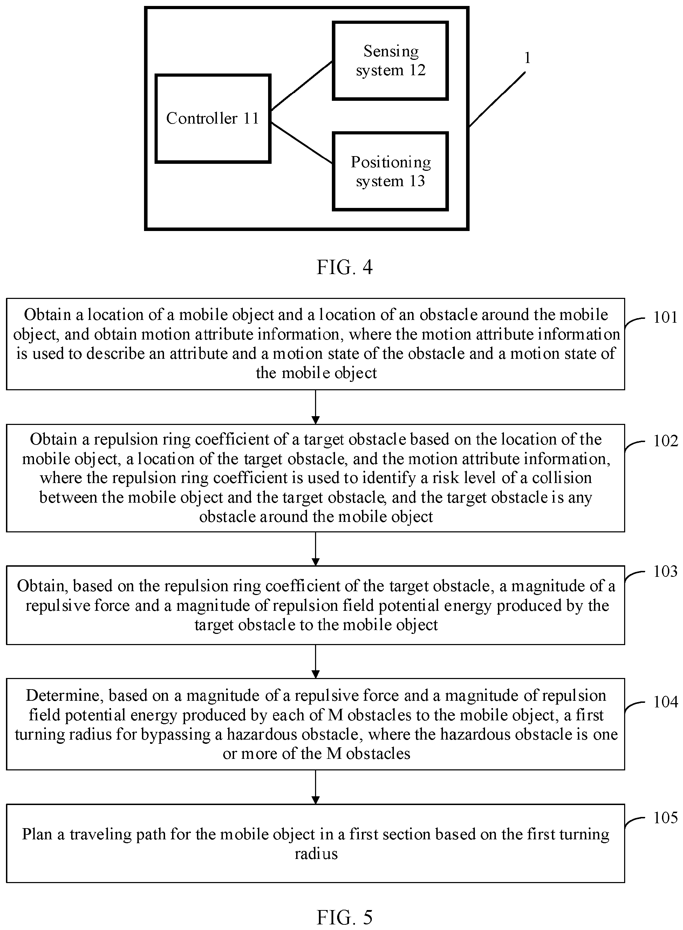

During autonomous driving of the mobile object 1, a traveling path of the mobile object 1 is affected by the surrounding obstacles. For example, referring to FIG. 2, the obstacle 2 is present in front of the mobile object 1, and the mobile object 1 needs to bypass the obstacle 2. Therefore, in the process of autonomous driving, the mobile object 1 plans the traveling path based on the surrounding obstacles, and drives autonomously according to the traveling path. A detailed implementation process of planning a traveling path is to be described in detail in the following embodiment shown in FIG. 5.

The obstacles around the mobile object 1 may be persons, vehicles, or the like around the mobile object 1.

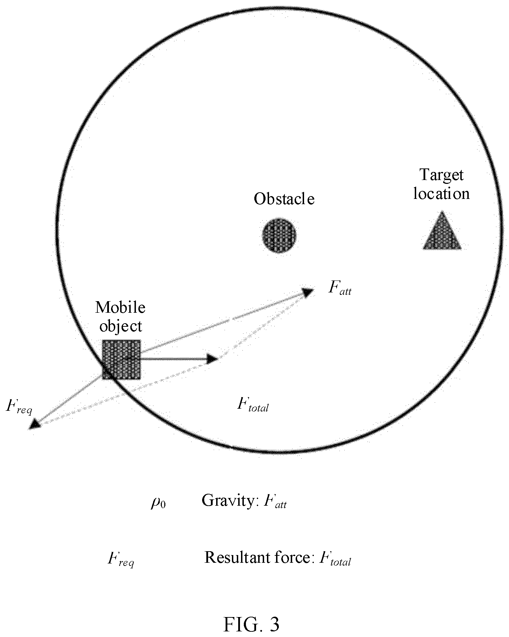

It should be noted that the autonomous driving process of the mobile object 1 can be abstracted as the mobile object 1 moving in an artificial attraction field. Referring to FIG. 3, the attraction field is an attraction field produced by a target location. The target location produces an attractive force to the mobile object 1. The mobile object 1 drives autonomously toward the target location under the traction of the attractive force. The target location is a location to be reached by the mobile object 1.

When the mobile object 1 travels into a repulsion ring of any obstacle around the mobile object 1, the mobile object 1 is also subjected to a repulsive force produced by the obstacle thereto. The attractive force and the repulsive force jointly produce a resultant force, which drives the mobile object 1 to continue traveling toward the target location.

The target location produces an attractive force to the mobile object 1, and accordingly produces attraction field potential energy to the mobile object 1; and the obstacle produces a repulsive force to the mobile object 1, and accordingly produces repulsion field potential energy to the mobile object 1. The attraction field potential energy produced by the target location and the repulsion field potential energy produced by the obstacle act together on the mobile object 1 to produce a resultant potential field energy, which is energy produced by the resultant force to the mobile object 1.

It should be noted that, the attractive force produced by the target location to the mobile object 1 is a virtual attractive force instead of a real attractive force, and the repulsive force produced by the obstacle to the mobile object 1 is also a virtual repulsive force instead of a real repulsive force. The attraction field potential energy produced by the target location to the mobile object 1 is virtual potential energy instead of real potential energy, and the repulsion field potential energy produced by the obstacle to the mobile object 1 is also virtual potential energy instead of real potential energy.

Optionally, the target location is a location on a global route for the mobile object 1 from a starting location to a destination location. Before the mobile object 1 performs autonomous driving, the starting location and the destination location are first obtained, a global route from the starting location to the destination location is planned on a map. The global route is divided into a plurality of sections, and the target location is an ending location of any one of the plurality of sections.

Optionally, the target location is a location of an intersection or traffic lights or the like, and the destination location is a target location of the last section of the global route.

After the plurality of sections are obtained, the mobile object 1 starts to drive autonomously. When starting to drive autonomously, the mobile object 1 selects the first section, and then drives autonomously under the combined action of an attractive force from a target location of the first section and a repulsive force from an obstacle around the mobile object 1. When driving autonomously to the target location of the first section, the mobile object 1 selects the second section, and then continues driving autonomously under the combined action of an attractive force from a target location of the second section and a repulsive force from an obstacle around the mobile object 1. When driving autonomously to the target location of the second section, the mobile object 1 selects a target location of the third section, and repeats the above process until the mobile object 1 drives autonomously to the destination location.

Referring to FIG. 4, an embodiment of this application provides a mobile object 1. The mobile object 1 includes a controller 11, a sensing system 12, and a positioning system 13. The controller 11, the sensing system 12, and the positioning system 13 are all mounted on the body of the mobile object 1. The controller 11 is communicatively connected to each of the sensing system 12 and the positioning system 13.

For example, assuming that the mobile object 1 is a vehicle, the controller 11, the sensing system 12, and the positioning system 13 are all mounted on the vehicle, and the controller 11 may be a vehicle-mounted terminal. For another example, assuming that the mobile object 1 is a mobile robot, the controller 11, the sensing system 12, and the positioning system 13 are all mounted on the mobile robot, and the controller 11 may be a computing platform in the mobile robot.

When the mobile object 1 is to perform autonomous driving, the sensing system 12 is configured to sense information such as a location, attribute information, and a motion parameter of an obstacle around the mobile object 1, and send the sensed information such as the location, the attribute information, and the motion parameter of the obstacle to the controller 11; and the positioning system 13 is configured to obtain information such as a location and a motion parameter of the mobile object 1, and send the obtained information such as the location and the motion parameter of the mobile object 1 to the controller 11.

Optionally, the sensing system 12 can periodically sense the information such as the location, the attribute information, and the motion parameter of the obstacle around the mobile object 1. Likewise, the positioning system 13 can periodically obtain the information such as the location and the motion parameter of the mobile object 1.

The controller 11 is configured to receive the information such as the location, the attribute information, and the motion parameter of the obstacle that is sent by the sensing system 12, as well as the information such as the location and the motion parameter of the mobile object 1 that is sent by the positioning system 13; determines a repulsion ring coefficient of the obstacle based on the received information such as the location and the motion parameter of the mobile object 1 and the received information such as the location, the attribute information, and the motion parameter of the obstacle, where the repulsion ring coefficient is used to identify a risk level of a collision between the mobile object 1 and the obstacle; and plans a traveling path for the mobile object 1 in a first section based on the repulsion ring coefficient, and controls the mobile object 1 to travel autonomously according to the traveling path.

Optionally, the risk level may be represented by a hazard level of the collision between the mobile object 1 and the obstacle.

Optionally, for a detailed implementation process of planning the traveling path by the controller 11, refer to the following embodiment shown in FIG. 5, which is not described in detail here.

Optionally, the sensing system 2 includes at least one sensing sensor, and the at least one sensing sensor includes one or more of a camera, a radar, and the like. The radar includes one or more of a millimeter-wave radar, a laser radar, and an ultrasonic radar.

Optionally, the positioning system 3 is a global positioning system (global positioning system, GPS) or a Beidou navigation system.

Referring to FIG. 5, an embodiment of this application provides a method for path planning, which can be applied to the mobile object shown in FIG. 4. The method is used to plan a path for the mobile object, so that the mobile object performs autonomous driving along the planned path. The method may be performed by the controller in the mobile object shown in FIG. 2, and includes the following steps.

Step 101: Obtain a location of a mobile object and a location of an obstacle around the mobile object, and obtain motion attribute information, where the motion attribute information is used to describe an attribute and a motion state of the obstacle and a motion state of the mobile object.

Before the mobile object starts to drive autonomously, the location of the mobile object is obtained as a starting location, and a destination location input by a user is obtained. A global route from the starting location to the destination location is determined in a map based on the starting location and the destination location. The global route is divided into a plurality of sections, and the first section is selected from the global route. For the convenience of description, the selected section is referred to as a first section, and then the method starts from this step.

Optionally, the motion attribute information includes at least one motion parameter such as a velocity, an acceleration, and a motion direction of the mobile object, attribute information such as a type of the obstacle, and at least one motion parameter such as a velocity, an acceleration, and a motion direction of the obstacle. The motion parameter of the mobile object is used to describe the motion state of the mobile object, the attribute information of the obstacle is used to describe the attribute of the obstacle, and the motion parameter of the obstacle is used to describe the motion state of the obstacle, so that the motion attribute information can describe the motion state of the mobile object, the attribute of the obstacle, and the motion state of the obstacle.

Optionally, the mobile object includes a positioning system, and the information such as the location and the motion parameter of the mobile object is obtained by using the positioning system.

Optionally, the mobile object includes a sensing system, and the information such as the location, the attribute information, and the motion parameter of obstacle around the mobile object is obtained by using the sensing system.

Optionally, the type of the obstacle is a person, an animal, a vehicle, or the like. When the obstacle is an animal, the type of the obstacle can be subdivided into pets or general animals or other animal types. Pets are generally animals such as dogs and cats, and general animals are animals other than pets. When the obstacle is a vehicle, the type of the obstacle includes information such as a vehicle type, a vehicle model, and/or a vehicle brand. The vehicle type may be a car, a truck, a bus or a minibus, or the like. The vehicle model may be a model under the vehicle brand.

Optionally, the motion attribute information further includes information such as a volume and a magnitude of momentum of the obstacle. An obstacle whose velocity is equal to 0, that is, an obstacle in a stationary state, has a magnitude of momentum of 0. For an obstacle whose velocity is greater than 0, that is, an obstacle in a moving state, an operation of obtaining a magnitude of momentum of the obstacle by using the sensing system may be: obtaining a mass of the obstacle, and calculating the magnitude of the momentum of the obstacle based on the mass of obstacle and the velocity of the obstacle that is sensed by the sensing system.

The momentum of the obstacle is a physical quantity related to the mass and velocity of the obstacle, indicating an action effect of the obstacle in motion. The momentum is also a vector, and the momentum of the obstacle is in the same direction as the velocity of the obstacle. The magnitude of the momentum of the obstacle is equal to the product of the mass and the velocity of the obstacle.

An operation of obtaining the mass of the obstacle may be: when the obtained type of the obstacle is a person or an animal, estimating the volume of the obstacle by using the sensing system, obtaining the density of the obstacle from a correspondence between a type and a density based on the type of the obstacle, and obtaining the mass of the obstacle based on the density and the volume of the obstacle.

Optionally, the correspondence between the type and the density is locally stored in the mobile object, or the correspondence between the type and the density is stored in a server. When the correspondence is stored locally in the mobile object, the density of the obstacle is obtained by querying the correspondence stored locally in the mobile object directly based on the type of the obstacle. When the correspondence is stored in the server, the density of the obstacle is obtained by querying the correspondence stored in the server based on the type of the obstacle.

Optionally, a person may ride on a vehicle such as a bicycle, a motorcycle, or an electric scooter, and the obstacle includes the vehicle and the person riding on the vehicle. The volume of the person riding on the vehicle can be sensed by using the sensing system, and then the mass of the person is calculated based on the volume and the density of the person. The mass of the person and the mass of the vehicle are added to obtain the mass of the obstacle.

The mass of the bicycle, the motorcycle, or the electric scooter may be stored locally in the bicycle, the motorcycle, or the electric scooter. Alternatively, information such as the model of the bicycle, the motorcycle, or the electric scooter is sensed by using the sensing system, and the mass of the bicycle, motorcycle, or the electric scooter is obtained by querying the Internet based on the sensed information such as the model of the bicycle, motorcycle, or the electric scooter.

Optionally, when the obstacle is a vehicle, the type of the obstacle includes information such as a vehicle type, a vehicle model, and/or a vehicle brand. The mass of the vehicle is obtained from the Internet based on the information such as the vehicle type, the vehicle model, and/or the vehicle brand.

The self-weight and the maximum load capacity of the vehicle are obtained by querying the Internet based on the information such as the vehicle type, the vehicle model, and/or the vehicle brand. A current load of the vehicle is estimated based on the maximum load capacity. The current load and the self-weight of the vehicle are added to obtain the mass of the vehicle.

For example, the current load of the vehicle is obtained by multiplying the maximum load capacity by a factor, which may be greater than 0 and less than or equal to 2. Optionally, the factor may be a specified factor or the like.

Optionally, when the obstacle is a vehicle, the vehicle includes a weight sensor, and the vehicle measures the mass of the vehicle by using the weight sensor. The vehicle sends a license plate number of the vehicle and the mass of the vehicle to the server. The server receives the license plate number of the vehicle and the mass of the vehicle, and correspondingly stores the license plate number of the vehicle and the mass of the vehicle in a correspondence between a license plate number and a mass.

Then, in this step, the license plate number of the vehicle is obtained by using the sensing system of the mobile object, and the mass of the vehicle is obtained from the correspondence between the license plate number and the mass stored in the server based on the license plate number of the vehicle. Alternatively, the mobile object is communicatively connected to the vehicle, and receives, through the communication connection, the mass of the vehicle sent by the vehicle.

The communication connection may be a short-range connection, such as a vehicle wireless communications technology (for example, vehicle to x (v2x)) connection.

Optionally, the obstacle around the mobile object is an obstacle within a range of a target radius centered at the location of the mobile object. A quantity M of obstacles around the mobile object is greater than or equal to 1.

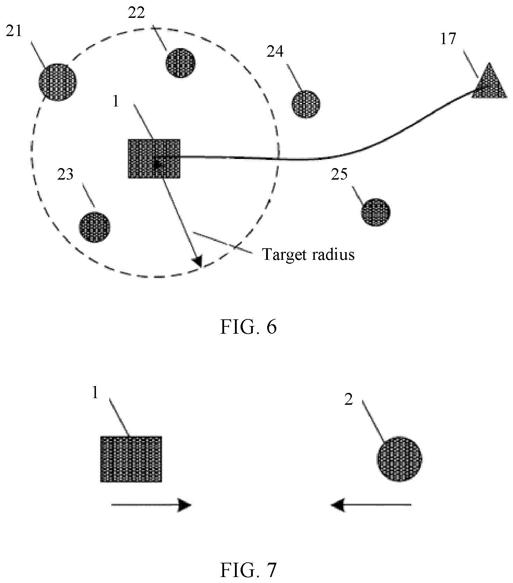

For example, referring to FIG. 6, in which the mobile object 1 is to move to a target location 17, obstacles around the mobile object 1 include obstacles 21, 22, and 23 within a range of the target radius centered at the location of the mobile object 1. In other words, the M obstacles include the obstacles 21, 22, and 23, while obstacles 24 and 25 are not within this range.

Optionally, before this step is performed, the target radius is obtained based on the velocity of the mobile object, so that in this step, an obstacle around the mobile object is determined based on the target radius. For example, a velocity range to which the velocity of the mobile object belongs is determined, and a corresponding radius is obtained from a correspondence between the velocity range and a radius based on the velocity range, and is used as the target radius.

Alternatively, the target radius is obtained by using a function based on the velocity of the mobile object. An independent variable of this function is the velocity of the mobile object, and a dependent variable of this function is the target radius. Optionally, the function is a linear function.

It is assumed that the velocity of the mobile object is 50, and the velocity range to which the velocity belongs is determined to be greater than 40 and less than 60. Based on the velocity range, the target radius of 60 meters is obtained from the correspondence between the velocity range and the radius shown in Table 1. Alternatively, the function is $y = ax + b$, where $x$ is an independent variable, which is used to represent the velocity of the mobile object, and $y$ is a dependent variable, which is used to represent the target radius. Based on the velocity of 50 of the mobile object, the target radius is calculated by using this function $y = ax + b$, and it is assumed that the calculated target radius is also 60 meters. Then, in this step, a location of an obstacle within a range of 60 meters centered at the location of the mobile object is obtained.

**Table 1**

| Velocity range (km/h) | Radius (m) |
| --- | --- |
| Less than or equal to 40 | 30 |
| Greater than 40 and less than 60 | 60 |
| Greater than or equal to 60 | 90 |

In Table 1, km is for kilometer, h is for hour, and m is for meter.

Step 102: Obtain a repulsion ring coefficient of a target obstacle based on the location of the mobile object, a location of the target obstacle, and the motion attribute information, where the repulsion ring coefficient is used to identify a risk level of a collision between the mobile object and the target obstacle, and the target obstacle is any obstacle around the mobile object.

The risk level may be represented by a hazard level of a collision between the mobile object and an obstacle. A larger repulsion ring coefficient indicates a greater extent of hazard of the collision between the mobile object and the target obstacle. Therefore, the repulsion ring coefficient is introduced during the planning of the path is planned. The larger the repulsion ring coefficient of the target obstacle, the earlier the target obstacle is to be avoided during the planning of the path, so that the possibility of the collision between the mobile object and the target obstacle can be eliminated or reduced.

Optionally, the repulsion ring coefficient of the target obstacle includes a repulsion coefficient and a repulsion ring range coefficient of the target obstacle. The repulsion coefficient is used to describe the extent of impact of the motion state of the mobile object and the motion state of the obstacle on the hazard level. The repulsion ring range coefficient is used to describe the extent of impact of the target obstacle on the hazard level.

Optionally, the motion attribute information includes a type of the target obstacle, and a correspondence between the type and the repulsion ring range coefficient is stored in advance.

As such, for the repulsion ring range coefficient of the target obstacle, in this step, the repulsion ring range coefficient of the target obstacle is obtained from the correspondence between the type and the repulsion ring range coefficient based on the type of the target obstacle.

The repulsion ring range coefficient of the obstacle includes a life value coefficient and a property value coefficient. The life value coefficient of the obstacle is used to reflect a life value of the obstacle, and the property value coefficient of the obstacle is used to reflect a property value of the obstacle.

Different obstacles have different life values and property values. Losses of different extents are caused when the mobile object collides with different obstacles. The life value coefficient and the property value coefficient are used to reflect the extent of loss caused by the collision.

For example, referring to the correspondence between the type and the repulsion ring range coefficient shown in the following Table 2, for a person and an animal, a life value of the person is higher than that of the animal, and a property value of the person is higher than that of the animal. Therefore, in the following Table 2, a life value coefficient of the person is greater than that of the animal, and a property value coefficient of the person is greater than that of the animal.

The repulsion ring range coefficient of the obstacle is used to describe impact of the obstacle on a size of the repulsion ring. Therefore, the size of the repulsion ring of the obstacle can be adjusted based on the repulsion ring range coefficient of the obstacle (the specific adjustment is described in detail in the following steps). A higher life value and property value of the obstacle indicate a larger repulsion ring of the obstacle. The larger the size of the repulsion ring, the earlier the obstacle avoidance processing is to be performed to avoid a collision or reduce the extent of hazard and loss of the collision during the planning of a moving path for the mobile object. The avoidance processing may be bypassing the obstacle, or braking in advance, or other processing, to avoid the collision or reduce the extent of hazard and loss caused by the collision, improving safety of autonomous driving.

**Table 2**

| Type | Repulsion ring range coefficient | |
|---|---|---|
| | Life value coefficient | Property value coefficient |
| Person | 1 | 1 |
| Animal | 0.8 | 0.8 |
| Car | 0.9 | 0.9 |
| ... | ... | ... |

Optionally, in the correspondence between the type and the repulsion ring range coefficient shown in Table 2, the type of the obstacle can be more detailed. For example, animals can be subdivided into pets or stray animals or the like, and cars can be subdivided into different branded cars.

For the repulsion coefficient of the target obstacle, the repulsion coefficient is obtained through the following operations of 1021 to 1024. The operations of 1021 to 2024 are as follows.

1021: Obtain a distance between the mobile object and the target obstacle based on the location of the mobile object and the location of the target obstacle.

There are M obstacles around the mobile object. In this step, distances between the mobile object and the M obstacles are obtained.

1022: Obtain at least one relative motion parameter between the mobile object and the target obstacle based on the motion parameter of the mobile object and the motion parameter of the target obstacle.

The motion parameter of the mobile object includes the velocity, the acceleration, the motion direction, and/or the like of the mobile object, and the motion parameter of the target obstacle includes the velocity, the acceleration, the magnitude of the momentum, the motion direction, and/or the like of the target obstacle.

The at least one relative motion parameter includes an angle of the collision between the mobile object and the target obstacle, and a relative velocity and a relative acceleration between the mobile object and the target obstacle. The angle of the collision is an included angle between the motion direction of the mobile object and the motion direction of the target obstacle.

Therefore, in this step, the angle of the collision between the mobile object and the target obstacle is obtained based on the motion direction of the mobile object and the motion direction of the target obstacle; and/or the relative velocity between the mobile object and the target obstacle is obtained based on the velocity of the mobile object and the velocity of the target obstacle; and/or the relative acceleration between the mobile object and the target obstacle is obtained based on the acceleration of the mobile object and the acceleration of the target obstacle.

There are M obstacles around the mobile object. In this step, angles of collisions, relative velocities, and/or relative accelerations between the mobile object and the M obstacles are obtained.

Next, how to obtain the repulsion coefficient based on the at least one relative motion parameter and the distance between the mobile object and the target obstacle is further described with reference to the accompanying drawings.

Optionally, the repulsion coefficient includes a repulsion velocity coefficient and/or a repulsion acceleration coefficient. The repulsion velocity coefficient is used to describe impact of the velocity of the mobile object and the velocity of the target obstacle on the hazard level, and the repulsion acceleration coefficient is used to describe impact of the acceleration of the mobile object and the acceleration of the target obstacle on the hazard level.

Optionally, the repulsion velocity coefficient is also used to describe impact of one or more of the distance and the angle of the collision between the mobile object and the target obstacle, and the magnitude of the momentum of the target obstacle on the hazard level. The repulsion acceleration coefficient is also used to describe impact of one or more of the distance and the angle of the collision between the mobile object and the target obstacle, and the magnitude of the momentum of the target obstacle on the hazard level.

Optionally, the repulsion velocity coefficient of the target obstacle is obtained through the following operation 1023, and the repulsion acceleration coefficient of the target obstacle is obtained through the following operation 1024.

Optionally, 1023 and 1024 may be performed simultaneously, or 1023 is performed before 1024, or 1024 is performed before 1023.

Alternatively, 1023 instead of 1024 is performed, or 1024 instead of 1023 is performed, that is, either of the repulsion velocity coefficient and the repulsion acceleration coefficient of the target obstacle is obtained.

1023: Obtain the repulsion velocity coefficient of the target obstacle based on the relative velocity between the mobile object and the target obstacle and a first parameter, where the first parameter includes one or more of the distance and the angle of the collision between the mobile object and the target obstacle, and the magnitude of the momentum of the target obstacle.

Optionally, the repulsion velocity coefficient of the target obstacle is obtained through the following operations (1-1) to (1-5). The operations of (1-1) to (1-5) are as follows.

(1-1): Determine a distance hazard level of the target obstacle based on the distance between the mobile object and the target obstacle, where the distance hazard level is used to reflect the extent of damage caused by a collision with the target obstacle that is to occur for the distance between the mobile object and the target obstacle when the mobile object continues moving in a current motion state of the mobile object.

A larger distance indicates a lower distance hazard level of the target obstacle, indicating a lesser extent of damage caused by the collision with the target obstacle that is to occur when the mobile object continues moving in the current motion state of the mobile object. This is because the larger the distance, the earlier the target obstacle avoidance processing is to be performed to avoid a collision or reduce the extent of hazard and loss of the collision during the planning of a path for the mobile object.

Optionally, a maximum distance is selected from the distances between the mobile object and the M obstacles, and a distance ratio of the target obstacle is calculated based on the distance between the mobile object and the target obstacle and the maximum distance. The distance ratio is equal to $1-D/D_{max}$, where D is the distance between the mobile object and the target obstacle, and $D_{max}$ is the maximum distance. A distance ratio range to which the distance ratio of the target obstacle belongs is determined, and the distance hazard level of the target obstacle is obtained from a correspondence between the distance ratio range and the distance hazard level.

For example, referring to the following Table 3, the correspondence between the distance ratio range and the distance hazard level is stored in advance, and assuming that the calculated distance ratio of the target obstacle is 0.5, it is determined that the distance ratio of the target obstacle belongs to a distance ratio range of greater than 0.3 and less than 0.7. Based on the distance ratio range, the distance hazard level "medium" of the target obstacle is obtained from the correspondence between the distance ratio range and the distance hazard level shown in the following Table 3.

**Table 3**

| Distance ratio range (m) | Distance hazard level |
|---|---|
| Greater than or equal to 0 and less than or equal to 0.3 | High |
| Greater than 0.3 and less than 0.7 | Medium |
| Greater than or equal to 0.7 and less than or equal to 1 | Low |

(1-2): Determine a velocity hazard level of the target obstacle based on the relative velocity between the mobile object and the target obstacle, where the velocity hazard level is used to reflect the extent of damage caused by a collision between the mobile object and the target obstacle that is to occur when the mobile object and the target obstacle continue moving at the relative velocity.

A higher relative velocity indicates a higher velocity hazard level of the target obstacle, indicating a greater extent of damage caused by the collision between the mobile object and the target obstacle that is to occur when the mobile object and the target obstacle continue moving at the relative velocity. This is because the higher the relative velocity, the stronger the collision between the mobile object and the target obstacle, and the less the time to plan the path of the mobile object, making it impossible to perform the target obstacle avoidance processing earlier to avoid a collision or reduce the extent of hazard and loss of the collision.

Optionally, a maximum relative velocity is selected from the relative velocities between the mobile object and the M obstacles, and a relative velocity ratio of the target obstacle is calculated based on the relative velocity between the mobile object and the target obstacle and the maximum relative velocity. The relative velocity ratio is equal to $V/V_{max}$, where V is the relative velocity between the mobile object and the target obstacle, and $V_{max}$ is the maximum relative velocity. A relative velocity ratio range to which the relative velocity ratio of the target obstacle belongs is determined, and the velocity hazard level of the target obstacle is obtained from a correspondence between the relative velocity ratio range and the velocity hazard level.

For example, referring to the following Table 4, the correspondence between the relative velocity ratio range and the velocity hazard level is stored in advance, and assuming that the calculated relative velocity ratio of the target obstacle is 0.5, it is determined that the relative velocity ratio of the target obstacle belongs to a relative velocity ratio range of greater than 0.4 and less than or equal to 0.6. Based on the relative velocity ratio range, the velocity hazard level "medium" of the target obstacle is obtained from the correspondence between the relative velocity ratio range and the velocity hazard level shown in the following Table 4.

**Table 4**

| Relative velocity ratio range (km/h) | Velocity hazard level |
|---|---|
| Greater than or equal to 0 and less than or equal to 0.2 | Low |

(continued)

| Relative velocity ratio range (km/h) | Velocity hazard level |
|---|---|
| Greater than 0.2 and less than or equal to 0.4 | Medium-low |
| Greater than 0.4 and less than or equal to 0.6 | Medium |
| Greater than 0.6 and less than or equal to 0.8 | Medium-high |
| Greater than 0.8 and less than or equal to 1.0 | High |

(1-3): Determine a momentum hazard level of the target obstacle based on the magnitude of the momentum of the target obstacle, where the momentum hazard level is used to reflect the extent of damage caused by a collision between the mobile object and the target obstacle under the magnitude of the momentum of the target obstacle.

A larger magnitude of the momentum indicates a higher momentum hazard level of the target obstacle, indicating a greater extent of damage caused by the collision between the mobile object and the target obstacle. This is because the larger the magnitude of the momentum, the stronger the collision between the target obstacle and the mobile object, resulting in a greater extent of hazard and loss of the collision.

Optionally, a maximum magnitude of momentum is selected from magnitudes of momentum of the M obstacles, and a momentum ratio of the target obstacle is calculated based on the magnitude of the momentum of the target obstacle and the maximum magnitude of the momentum. The momentum ratio is equal to $I/I_{max}$, where I is the magnitude of the momentum of the target obstacle, and $I_{max}$ is the maximum magnitude of the momentum. A momentum ratio range to which the momentum ratio of the target obstacle belongs is determined, and the momentum hazard level of the target obstacle is obtained from a correspondence between the momentum ratio range and the momentum hazard level.

For example, referring to the following Table 5, the correspondence between the momentum ratio range and the momentum hazard level is stored in advance, and assuming that the calculated momentum ratio of the target obstacle is 0.5, it is determined that the momentum ratio of the target obstacle belongs to a momentum ratio range of greater than 0.3 and less than or equal to 0.7. Based on the momentum ratio range, the momentum hazard level "medium" of the target obstacle is obtained from the correspondence between the momentum ratio range and the momentum hazard level shown in the following Table 5.

**Table 5**

| Momentum ratio range (kg*m/s) | Momentum hazard level |
|---|---|
| Greater than or equal to 0 and less than or equal to 0.3 | High |
| Greater than 0.3 and less than 0.7 | Medium |
| Greater than or equal to 0.7 and less than or equal to 1 | Low |

In Table 5, kg is for kilogram, and s is for second.

(1-4): Determine an angle hazard level of the target obstacle based on the angle of the collision between the mobile object and the target obstacle, where the angle hazard level is used to reflect the extent of damage caused by a collision between the mobile object and the target obstacle under the angle of the collision.

A larger angle of the collision indicates a higher angle hazard level of the target obstacle, indicating a greater extent of damage caused by the collision between the mobile object and the target obstacle. This is because the larger the angle of the collision, the stronger the collision between the target obstacle and the mobile object, resulting in a greater extent of hazard and loss of the collision.

For example, referring to FIG. 7, a motion direction of a mobile object 1 is completely opposite to that of the target obstacle 2, that is, the mobile object 1 and the target obstacle 2 are moving toward each other. At this time, an angle of a collision between the mobile object 1 and the target obstacle 2 is at the maximum, that is, 180 degrees. When the mobile object 1 collides with the target obstacle 2 at the angle of the collision, the collision between the mobile object 1 and the target obstacle 2 is the strongest, resulting in a greatest extent of hazard and loss of the collision.

Optionally, an angle range to which the angle of the collision between the mobile object and the target obstacle belongs is determined, and the angle hazard level of the target obstacle is obtained from a correspondence between the angle range and the angle hazard level.

For example, referring to the following Table 6, the correspondence between the angle range and the angle hazard level is stored in advance, and assuming that the angle of the collision between the mobile object and the target obstacle is 156 degrees, it is determined that the angle of the collision belongs to an angle range of greater than 150 degrees. Based on the angle range, the angle hazard level "High" of the target obstacle is obtained from the correspondence between the angle range and the angle hazard level shown in the following Table 6.

**Table 6**

| Angle range (degrees) | Angle hazard level |
|---|---|
| Greater than or equal to 0 and less than or equal to 60 | Low |
| Greater than 60 and less than or equal to 90 | Medium-low |
| Greater than 90 and less than or equal to 120 | Medium |
| Greater than 120 and less than or equal to 150 | Medium-high |
| Greater than 150 | High |

(1-5): Obtain the repulsion velocity coefficient of the target obstacle based on the distance hazard level, the velocity hazard level, the momentum hazard level, and the angle hazard level of the target obstacle.

A correspondence among the distance hazard level, the velocity hazard level, the momentum hazard level, and a first overall level is stored in advance. In this step, based on the distance hazard level, the velocity hazard level, and the momentum hazard level of the target obstacle, the first overall level of the target obstacle is obtained from the correspondence among the distance hazard level, the velocity hazard level, the momentum hazard level, and the first overall level. The repulsion velocity coefficient of the target obstacle is obtained based on the first overall level and the angle hazard level of the target obstacle.

The first overall level is used to reflect the extent of damage caused by the collision between the mobile object and the target obstacle under the combined action of the distance, the relative velocity, and the magnitude of the momentum. A higher first overall level indicates a greater extent of damage caused by the collision between the mobile object and the target obstacle.

Optionally, based on the first overall level and the angle hazard level of the target obstacle, a corresponding repulsion velocity coefficient level is obtained from a correspondence among the first overall level, the angle hazard level, and the repulsion velocity coefficient level; and based on the repulsion velocity coefficient level, the repulsion velocity coefficient of the target obstacle is obtained by using a defuzzification algorithm. To be specific, the repulsion velocity coefficient level is input to the defuzzification algorithm as an input of the defuzzification algorithm, and then the repulsion velocity coefficient output from the defuzzification algorithm based on the repulsion velocity coefficient level is obtained. The defuzzification algorithm is a calculation process of transforming a fuzzy quantity (the repulsion velocity coefficient level (a quantity such as high, medium, or low)) into a crisp output quantity (for example, a coefficient), which is also referred to as defuzzification or the like. Commonly used defuzzification algorithms include maximum membership method (average), center of gravity method (weighted average method), and bisector of area method.

This application does not impose a limitation on the method for obtaining the repulsion velocity coefficient of the target obstacle. A defuzzification algorithm in the conventional technology can be used, and other algorithms can also be used.

The repulsion velocity coefficient level is used to reflect the extent of damage caused by the collision between the mobile object and the target obstacle under the combined action of the distance, the relative velocity, the magnitude of the momentum, and the angle of the collision. A higher repulsion velocity coefficient level indicates a greater extent of damage caused by the collision between the mobile object and the target obstacle.

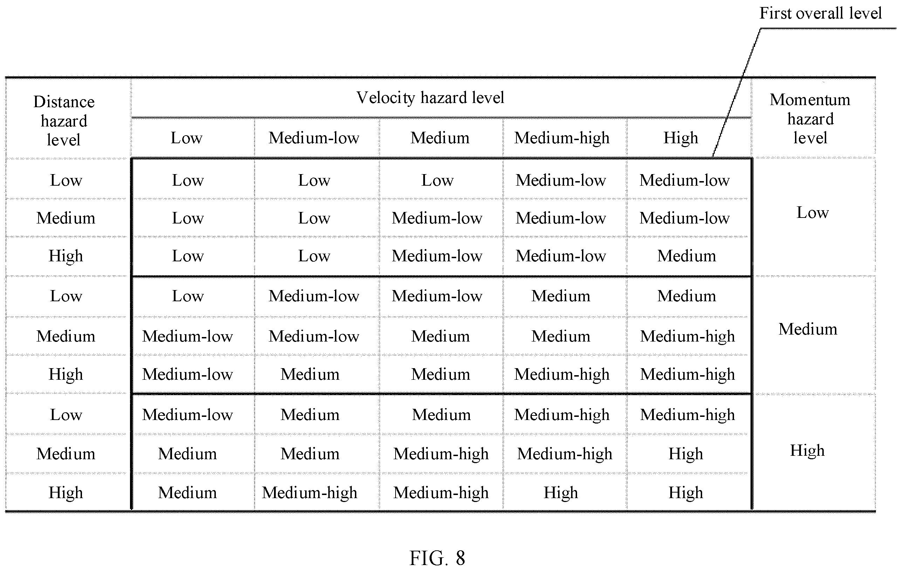

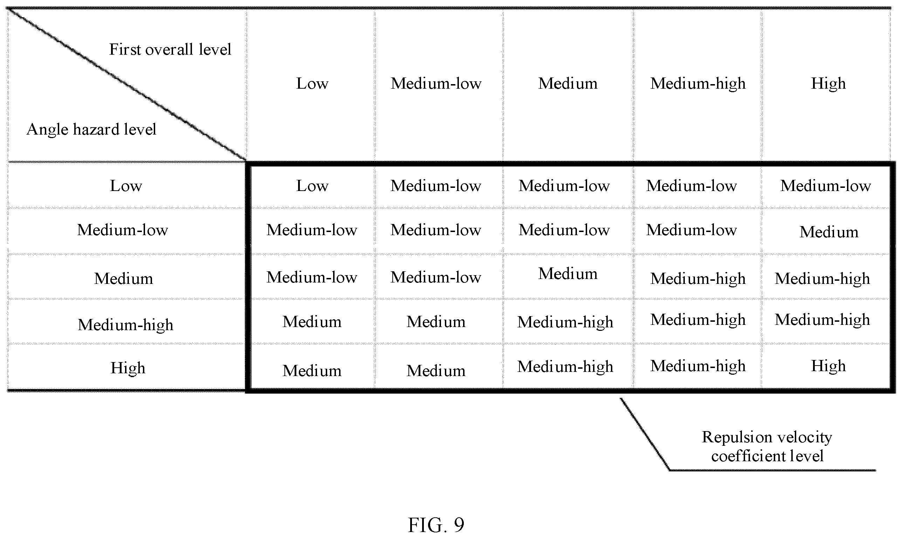

For example, the correspondence among the distance hazard level, the velocity hazard level, the momentum hazard level, and the first overall level shown in FIG. 8 is stored in advance. When the distance hazard level of the target obstacle is "medium", the velocity hazard level is "medium", and the momentum hazard level is also "medium", the first overall level of the target obstacle obtained from the correspondence among the distance hazard level, the velocity hazard level, the momentum hazard level, and the first overall level shown in FIG. 8 is also "medium". Based on the first overall level "medium" and the angle hazard level "high" of the target obstacle, a corresponding repulsion velocity coefficient level obtained from the correspondence among the first overall level, the angle hazard level, and the repulsion velocity coefficient level shown in FIG. 9 is "medium-high". Based on the repulsion velocity coefficient level "medium-high", the repulsion velocity coefficient of the target obstacle is obtained by using the defuzzification algorithm.

1024: Obtain the repulsion acceleration coefficient of the target obstacle based on the distance, the relative acceleration, and the angle of the collision between the mobile object and the target obstacle, and the magnitude of the momentum of the target obstacle.

If 1023 has not been performed before 1024, the distance hazard level, an acceleration hazard level, the momentum hazard level, and the angle hazard level of the target obstacle are obtained in this step. For a detailed implementation process of obtaining the distance hazard level, the momentum hazard level, and the angle hazard level of the target obstacle, refer to the related content in 1023 described above, and details are not described here again. If 1023 has been performed before 1024, only the acceleration hazard level of the target obstacle needs to be obtained in this step.

For the acceleration hazard level of the target obstacle, in this step, the acceleration hazard level of the target obstacle is determined based on the relative acceleration between the mobile object and the target obstacle, where the acceleration hazard level is used to reflect the extent of damage caused by a collision between the mobile object and the target obstacle that is to occur when the mobile object and the target obstacle continue moving at the relative acceleration.

A higher relative acceleration indicates a higher acceleration hazard level of the target obstacle, indicating a greater extent of damage caused by the collision between the mobile object and the target obstacle that is to occur when the mobile object and the target obstacle continue moving at the relative acceleration. This is because the higher the relative acceleration, the stronger the force caused by the collision between the mobile object and the target obstacle, and the less the time to plan the path of the mobile object, making it impossible to perform the target obstacle avoidance processing earlier to avoid a collision or reduce the extent of hazard and loss of the collisionpath.

During implementation, a maximum relative acceleration is selected from the relative accelerations between the mobile object and the M obstacles, and a relative acceleration ratio of the target obstacle is calculated based on the relative acceleration between the mobile object and the target obstacle and the maximum relative acceleration. The relative acceleration ratio is equal to $A/A_{max}$, where A is the relative acceleration between the mobile object and the target obstacle, and $A_{max}$ is the maximum relative acceleration. A relative acceleration ratio range to which the relative acceleration ratio of the target obstacle belongs is determined, and the acceleration hazard level of the target obstacle is obtained from a correspondence between the relative acceleration ratio range and the velocity hazard level.

For example, referring to the following Table 7, the correspondence between the relative acceleration ratio range and the acceleration hazard level is stored in advance, and assuming that the calculated relative acceleration ratio of the target obstacle is 0.5, it is determined that the relative acceleration ratio of the target obstacle belongs to a relative acceleration ratio range of greater than 0.4 and less than or equal to 0.6. Based on the relative acceleration ratio range, the acceleration hazard level "medium" of the target obstacle is obtained from the correspondence between the relative acceleration ratio range and the acceleration hazard level shown in the following Table 7.

**Table 7**

| Relative acceleration ratio range (m/s$^2$) | Acceleration hazard level |
| --- | --- |
| Greater than or equal to 0 and less than or equal to 0.2 | Low |
| Greater than 0.2 and less than or equal to 0.4 | Medium-low |
| Greater than 0.4 and less than or equal to 0.6 | Medium |
| Greater than 0.6 and less than or equal to 0.8 | Medium-high |
| Greater than 0.8 and less than or equal to 1.0 | High |

Optionally, a correspondence among the distance hazard level, the acceleration hazard level, the momentum hazard level, and a second overall level is stored in advance. For the repulsion acceleration coefficient of the target obstacle, based on the distance hazard level, the acceleration hazard level, and the momentum hazard level of the target obstacle, the second overall level of the target obstacle is obtained from the correspondence among the distance hazard level, the acceleration hazard level, the momentum hazard level, and the second overall level. The repulsion acceleration coefficient of the target obstacle is obtained based on the second overall level and the angle hazard level of the target obstacle.

The second overall level is used to reflect the extent of damage caused by the collision between the mobile object and the target obstacle under the combined action of the distance, the relative acceleration, and the magnitude of the momentum. A higher second overall level indicates a greater extent of damage caused by the collision between the mobile object and the target obstacle.

Optionally, based on the second overall level and the angle hazard level of the target obstacle, a corresponding repulsion acceleration coefficient level is obtained from a correspondence among the second overall level, the angle hazard level, and the repulsion acceleration coefficient level; and based on the repulsion acceleration coefficient level, the repulsion acceleration coefficient of the target obstacle is obtained by using a defuzzification algorithm. To be specific, the repulsion acceleration coefficient level is input to the defuzzification algorithm as an input of the defuzzification algorithm, and then the repulsion acceleration coefficient output from the defuzzification algorithm based on the repulsion acceleration coefficient level is obtained.

The repulsion acceleration coefficient level is used to reflect the extent of damage caused by the collision between the mobile object and the target obstacle under the combined action of the distance, the relative acceleration, the magnitude of the momentum, and the angle of the collision. A higher repulsion acceleration coefficient level indicates a greater extent of damage caused by the collision between the mobile object and the target obstacle.

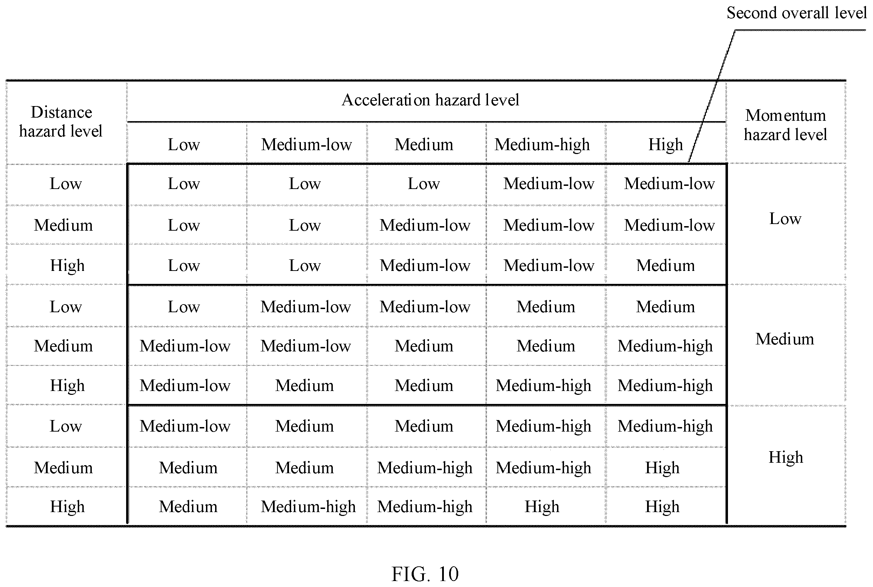

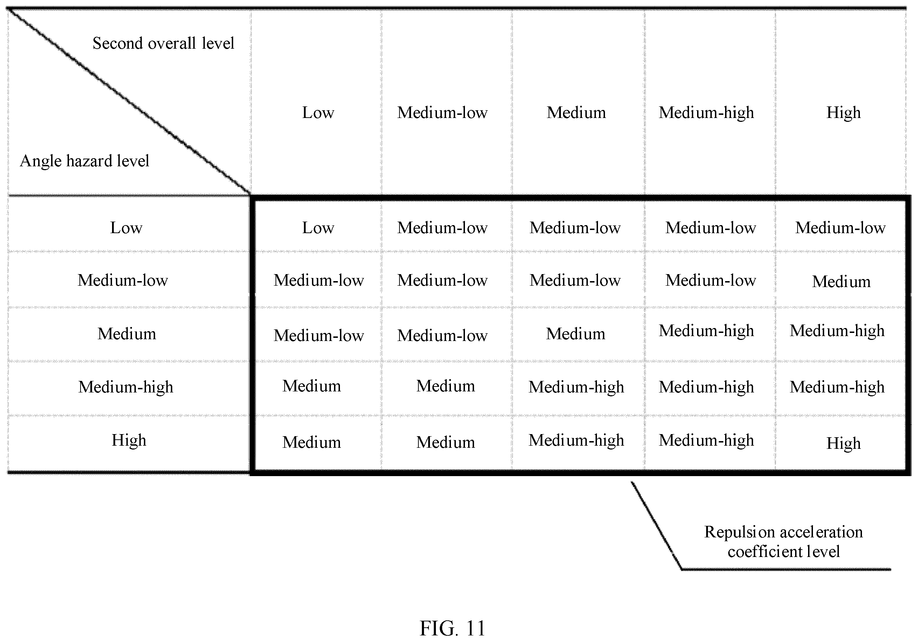

For example, the correspondence among the distance hazard level, the acceleration hazard level, the momentum hazard level, and the second overall level shown in FIG. 10 is stored in advance. When the distance hazard level of the target obstacle is "medium", the acceleration hazard level is "medium", and the momentum hazard level is also "medium", the second overall level of the target obstacle obtained from the correspondence among the distance hazard level, the acceleration hazard level, the momentum hazard level, and the second overall level shown in FIG. 10 is also "medium". Based on the second overall level "medium" and the angle hazard level "high" of the target obstacle, a corresponding repulsion acceleration coefficient level obtained from the correspondence among the second overall level, the angle hazard level, and the repulsion acceleration coefficient level shown in FIG. 11 is "medium-high". Based on the repulsion acceleration coefficient level "medium-high", the repulsion acceleration coefficient of the target obstacle is obtained by using the defuzzification algorithm.

Step 103: Obtain, based on the repulsion ring coefficient of the target obstacle, a magnitude of a repulsive force and a magnitude of repulsion field potential energy produced by the target obstacle to the mobile object.

In this step, a target location is one selected from a plurality of target locations included in the global route.

Optionally, the magnitude of the repulsive force and the magnitude of the repulsion field potential energy produced by the target obstacle to the mobile object are obtained through the following operations 1031 and 1032. The operations of 1031 and 1032 are as follows.

1031: Obtain a repulsion ring size parameter of the target obstacle based on the repulsion ring range coefficient.

The repulsion ring size parameter of the target obstacle is obtained according to the following first formula.

The first formula is:

$$\rho_o = \left(1+K_l\right)\left(1+K_m\right)\rho_r .$$

In the first formula, $\rho_o$ is the repulsion ring size parameter of the target obstacle, $K_l$ is a life value coefficient, $K_m$ is a property value coefficient, and $\rho_r$ is a specified repulsion ring size parameter and is a fixed value.

Optionally, when the repulsion ring of the target obstacle is a circular ring, the repulsion ring size parameter of the target obstacle is a radius of the repulsion ring, $\rho_o$ is a radius of the repulsion ring of the target obstacle, and $\rho_r$ is a specified repulsion ring radius.

Optionally, when the repulsion ring of the target obstacle is a rectangular ring, the repulsion ring size parameter of the target obstacle includes a length and a width of the repulsion ring. $\rho_o$ is a length of the repulsion ring of the target obstacle, and $\rho_r$ is a specified length of the repulsion ring; or $\rho_o$ is a width of the repulsion ring of the target obstacle, and $\rho_r$ is a specified width of the repulsion ring.

Optionally, when the repulsion ring of the target obstacle is an elliptical ring, the repulsion ring size parameter of the target obstacle includes a length of a major axis and a length of a minor axis of the repulsion ring. $\rho_o$ is a length of a major axis of the repulsion ring of the target obstacle, and $\rho_r$ is a specified length of the major axis of the repulsion ring; or $\rho_o$ is a length of a minor axis of the repulsion ring of the target obstacle, and $\rho_r$ is a specified length of the minor axis of the repulsion ring.

In the first formula, the larger the repulsion ring range coefficient of the target obstacle, the larger the repulsion ring size parameter of the target obstacle, and the larger the repulsion ring of the target obstacle. In other words, a larger life value coefficient and/or property value coefficient of the target obstacle indicate or indicates a larger repulsion ring size parameter of the target obstacle. Therefore, obstacles having different life values and/or property values have different repulsion ring size parameters, and a higher life value and/or property value of an obstacle indicate or indicates a larger repulsion ring size parameter of the obstacle.

The larger the repulsion ring size parameter of the obstacle, the earlier the obstacle produces a repulsive force to the mobile object, so that the mobile object determines to avoid the obstacle earlier, to avoid a collision with the obstacle having the higher life value and/or property value to the greatest extent, thereby improving safety of autonomous driving.

1032: Determine the magnitude of the repulsive force and the magnitude of the repulsion field potential energy produced by the target obstacle to the mobile object based on the repulsion ring size parameter of the target obstacle, the location of the mobile object, the location of the target obstacle, the repulsion coefficient of the target obstacle, the motion parameter of the target obstacle, and the target location, where the target location is an ending location of the first section.

The magnitude of the repulsive force produced by the target obstacle to the mobile object is obtained according to the following second formula.

The second formula is:

$$F_{req}(q) = \begin{cases} \dfrac{\eta}{\rho^2(q,q_{obs})} \cdot \left( \dfrac{1}{\rho(q,q_{obs})} - \dfrac{1}{\rho_o} \right) - K_v v_r - K_a a_r, & \rho(q,q_{obs}) \le \rho_o \\ 0, & \rho(q,q_{obs}) > \rho_o \end{cases}.$$

In the second formula, $F_{req}(q)$ is the magnitude of the repulsive force produced by the target obstacle to the mobile object, $q$ is the location of the mobile object, $q_{obs}$ is the location of the target obstacle, $\rho(q,q_{obs})$ is the distance between the target obstacle and the mobile object, $K_v$ is the repulsion velocity coefficient, $v_r$ is the velocity of the target obstacle, $K_a$ is the repulsion acceleration coefficient, $a_r$ is the acceleration of the target obstacle, and $\eta$ is a repulsion location gain coefficient and is a constant.

A magnitude of field energy of the repulsion field produced by the target obstacle to the mobile object is obtained according to the following third formula.

The third formula is:

$$U_{req}(q) = \begin{cases} \dfrac{1}{2}\eta \left( \dfrac{1}{\rho(q,q_{obs})} - \dfrac{1}{\rho_o} \right)^2 + \dfrac{1}{2}K_v v_r^2 + \dfrac{1}{2}K_a a_r^2, & \rho(q,q_{obs}) \le \rho_o \\ 0, & \rho(q,q_{obs}) > \rho_o \end{cases}.$$

In the third formula, $U_{req}(q)$ is the magnitude of the potential energy of the target obstacle to the mobile object.

The operations of steps 102 and 103 are repeated to obtain the magnitude of the repulsive force and the magnitude of the repulsion field potential energy produced by each of the M obstacles to the mobile object.

Step 104: Determine, based on the magnitude of the repulsive force and the magnitude of the repulsion field potential energy produced by each of the M obstacles to the mobile object, a first turning radius for bypassing a hazardous obstacle, where the hazardous obstacle is one or more of the M obstacles.

Before this step is performed, the hazardous obstacle is determined from the M obstacles. The hazardous obstacle is an obstacle in the M obstacles with which the mobile object is to collide when continuing moving in the current motion state within a first time period. The first time period is a time period from a current time to a first time, where the first time is after the current time.

Optionally, the motion state here refers to a current motion direction of the mobile object. That is, an obstacle in the M obstacles with which the mobile object is to collide when continuing moving in the current motion direction within the first time period is the hazardous obstacle.

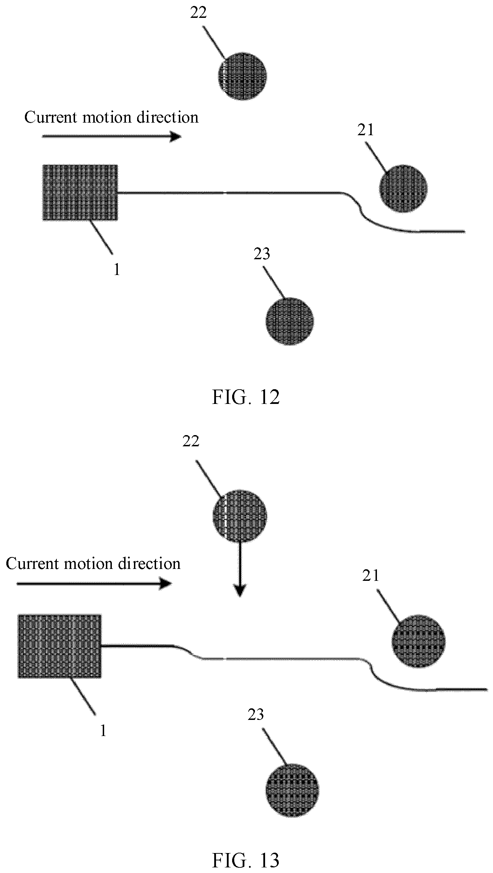

Referring to FIG. 12, obstacles around a mobile object 1 include obstacles 21, 22, and 23. When the mobile object 1 moves in a straight line according to a current motion direction of the mobile object within the first time period, a collision with the obstacle 21 in front of the mobile object 1 is to occur. Therefore, the obstacle 21 is a hazardous obstacle.

Optionally, an obstacle located in front left or right of the mobile object 1 may also move to front of the mobile object 1 within the first time period, and when the mobile object moves in a straight line according to the current motion direction, a collision with the obstacle is also to occur. Therefore, the obstacle is also a hazardous obstacle.

For example, referring to FIG. 13, for an obstacle 22 in front left of the mobile object 1, within the first time period, if the mobile object 1 still moves in a straight line according to a current motion direction, the obstacle 22 moves at its current velocity and motion direction to front of the mobile object 1 and possibly collides with the mobile object 1. Therefore, the obstacle 22 is also considered as a hazardous obstacle.

Optionally, a time difference between the current time and the first time is a specified time difference. For example, the time difference may be equal to a length of a period during which the sensing system 12 senses the obstacle.

Optionally, the operation of determining the hazardous obstacle from the M obstacles may be: determining the obstacle directly in front of or in front left or right of the mobile object based on the locations of the M obstacles, and determining the obstacle directly in front of the mobile object as the hazardous obstacle.

Optionally, for the obstacle in front left or right of the mobile object, based on the motion direction of the obstacle, it is determined whether the obstacle is moving toward directly front of the mobile object, and if the obstacle is moving toward directly front of the mobile object, the obstacle is determined as the hazardous obstacle.

In this step, a magnitude of an attractive force and a magnitude of attraction field potential energy produced by the target location to the mobile object are determined based on the target location and the location of the mobile object. Based on the magnitude of the attractive force and the magnitude of the attraction field potential energy produced by the target location to the mobile object, and the magnitude of the repulsive force and the magnitude of the repulsion field potential energy produced by each of the M obstacles to the mobile object, a magnitude of a resultant force and a magnitude of resultant potential field energy produced by each of the M obstacles and the target location to the mobile object are determined. Based on the magnitude of the resultant force and the magnitude of the resultant potential field energy produced by each of the M obstacles and the target location to the mobile object, the first turning radius of the path for the mobile object to bypass the hazardous obstacle is determined.

Optionally, the magnitude of the attraction field potential energy produced by the target location to the mobile object is $U_{att}(q) = \frac{1}{2}\xi\rho^2(q,q_{goal})$, $q_{goal}$ is the target location, $\xi$ is an attraction location gain coefficient and is a constant, and $\rho(q,q_{goal})$ is the distance between the mobile object and the target location. The magnitude of the resultant potential field energy produced by the target location and the obstacle to the mobile object is:

$$U_{total}(q) = U_{att}(q) + U_{req}(q).$$

Optionally, the magnitude of the attractive force produced by the target location to the mobile object is $F_{att}(q) = -\xi\rho$ $(q,q_{goal})$, and the magnitude of the resultant force produced by the target location and the obstacle to the mobile object is

$$F_{total}(q) = F_{att}(q) + F_{req}(q).$$

Optionally, when the mobile object is a vehicle, in this step, based on the magnitude of the resultant force and the magnitude of the resultant potential field energy produced by each of the M obstacles and the target location to the mobile object, a second turning radius of the path for the mobile object to bypass the hazardous obstacle is determined. The first turning radius is determined based on the second turning radius and a minimum turning radius of the mobile object.

Optionally, when the second turning radius is greater than or equal to the minimum turning radius of the mobile object, the second turning radius is determined as the first turning radius; or when the second turning radius is less than the minimum turning radius of the mobile object, the minimum turning radius of the mobile object is determined as the first turning radius.

Optionally, before this step is performed, the minimum turning radius of the mobile object is determined based on a velocity of the vehicle, a wheelbase of the vehicle, and a maximum turning angle.

Optionally, a lateral acceleration of the vehicle should not exceed 0.4g when avoiding an obstacle based on a kinematic differential equation of a two-degree-of-freedom vehicle, a velocity of the autonomous vehicle, and changing a steering wheel angle of the vehicle, where g is the acceleration of gravity. Therefore, the minimum turning radius of the mobile object is determined according to the following fourth formula.

The fourth formula is:

$$\begin{cases} r_1 = \dfrac{v^2}{0.4g} \\ r_2 = \dfrac{L}{\delta_{f\max}} \\ r = f_{r\min}(v,L,\delta_{f\max}) = \max(r_1,r_2) \end{cases}.$$

In the fourth formula, r is the minimum turning radius, V is the velocity of the autonomous vehicle, L is the wheelbase of the vehicle, and $\delta_{f\max}$ is a maximum turning angle that can be actually achieved by the vehicle.

Step 105: Plan the traveling path for the mobile object in the first section based on the first turning radius.

In this step, a location to be reached by the mobile object at the first time is determined based on the first turning radius, where the first time is after the current time.

After the location to be reached is determined, the mobile object is controlled to autonomously drive to the location to be reached at the first time. In addition, a distance between the location to be reached and the target location is calculated based on the location to be reached and the target location. When the calculated distance is less than a distance threshold, it is determined that the mobile object travels to the target location, that is, the mobile object has finished the first section, and a next section that has not been traveled is selected from the global route as the first section, and then the operations of steps 101 to 105 continue to be performed. When the calculated distance is greater than or equal to the distance threshold, it indicates that the first section has not been finished, and the operations of steps 101 to 105 also continue to be performed.

In this embodiment of this application, in the autonomous driving process of the mobile object, the location and the motion parameter of the mobile object are obtained, and a location, a type, and a motion parameter of an obstacle around the mobile object are obtained. A repulsion ring range coefficient of the obstacle is obtained based on the type of the obstacle, where the repulsion ring range coefficient reflects the extent of impact of the obstacle on a hazard level, which is a hazard level of a collision between the mobile object and the obstacle. In addition, a repulsion coefficient of the obstacle is obtained based on the location and the motion parameter of the mobile object and the location and the motion parameter of the obstacle, where the repulsion coefficient reflects the extent of impact of the motion state of the mobile object and the motion state of the obstacle on the hazard level, and the repulsive force is produced by the obstacle to the mobile object. In this way, the magnitude of the repulsive force and the magnitude of the repulsion field potential energy produced by the obstacle to the mobile object that are obtained based on the repulsion ring range coefficient, the repulsion coefficient, the location of the mobile object, and the location and the motion parameter of the obstacle are more accurate. In this application, the magnitude of the repulsive force and the magnitude of the repulsion field potential energy produced by the obstacle to the mobile object are obtained based on many factors, which are all factors related to the extent of hazard caused by the collision between the mobile object and the obstacle. Therefore, the second turning radius for the mobile object to bypass a hazardous obstacle that is obtained based on the magnitude of the repulsive force and the magnitude of the repulsion field potential energy produced by the obstacle to the mobile object is more accurate and reasonable, and the path planned based on the second turning radius is smoother, thereby improving driving experience, and further improving safety of autonomous driving. In addition, when the mobile object is a vehicle, a minimum turning radius is further obtained based on a velocity of the vehicle and an attribute of the vehicle (such as a maximum turning angle and a wheelbase). The path is planned based on the second turning radius and the minimum turning radius, and can be made smoother. The mobile object drives autonomously based on the smoother path, further improving safety of autonomous driving. In addition, for the parameters such as the distance, the relative velocity, the relative acceleration, the magnitude of the momentum, and the angle of the collision based on which the repulsion coefficient is obtained, a fuzzification method is used to obtain the hazard levels corresponding to these parameters based on these parameters. Based on the hazard levels corresponding to these parameters, a defuzzification method is used to obtain the repulsion coefficient. The fuzzification and defuzzification methods require a small amount of computation, which can reduce the computation amount of path planning, quickly plan the path, reduce a response time of the mobile object, and further improve safety of autonomous driving.

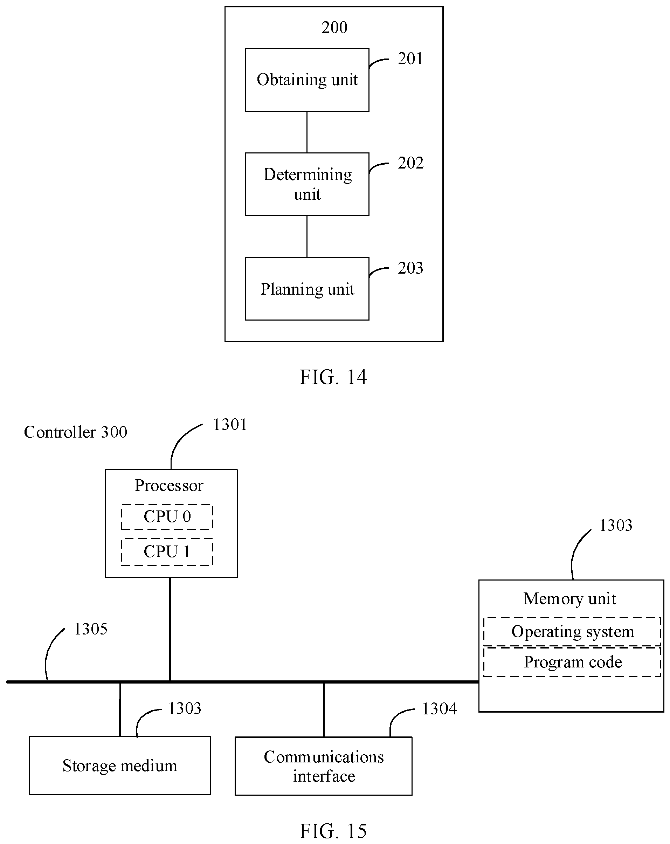

The method for path planning according to embodiments of this application is described above in detail with reference to FIG. 1 to FIG. 13, and an apparatus for path planning and a related device according to embodiments of this application are described below with reference to FIG. 14 and FIG. 15.

Referring to FIG. 14, an embodiment of this application provides an apparatus 200 for path planning. The apparatus 200 is deployed in the controller provided in any one of the foregoing embodiments, for example, deployed in the controller provided in the embodiment shown in FIG. 4 or FIG. 5. The apparatus 200 includes:

an obtaining unit 201, configured to obtain a location of an obstacle around a mobile object and motion attribute information, where the motion attribute information is used to describe an attribute and a motion state of the obstacle and a motion state of the mobile object;
a determining unit 202, configured to determine a repulsion ring coefficient of the obstacle based on the location of the obstacle and the motion attribute information, where the repulsion ring coefficient is used to identify a hazard level of a collision between the mobile object and the obstacle; and
a planning unit 203, configured to plan a traveling path for the mobile object in a first section based on the repulsion ring coefficient.

Optionally, for a detailed implementation process for obtaining the location of the obstacle and the motion attribute information by the obtaining unit 201, refer to the related content in step 101 of the embodiment shown in FIG. 5, which is not described in detail herein again.

Optionally, for a detailed implementation process of determining the repulsion ring coefficient of the obstacle by the determining unit 202, refer to the related content in step 102 of the embodiment shown in FIG. 5, which is not described in detail herein again.

Optionally, for a detailed implementation process of planning the traveling path by the planning unit 203, refer to the related content in steps 103 to 105 of the embodiment shown in FIG. 5, which is not described in detail herein again.

Optionally, the repulsion ring coefficient includes a repulsion ring range coefficient and a repulsion coefficient.

The repulsion ring range coefficient is used to identify the extent of impact of the obstacle on the hazard level, and the repulsion coefficient is used to identify the extent of impact of the motion state of the mobile object and the motion state of the obstacle on the hazard level.

Optionally, the motion attribute information includes one or more of a velocity, an acceleration, and a motion direction of the mobile object, and one or more of a velocity, an acceleration, and a motion direction of the obstacle.

The determining unit 202 is configured to: obtain a distance between the mobile object and the obstacle based on a location of the mobile object and the location of the obstacle; obtain at least one relative motion parameter based on the motion attribute information, where the at least one relative motion parameter includes one or more of a relative velocity, a relative acceleration, and an angle of the collision between the mobile object and the obstacle, and the angle of the collision is an included angle between the motion direction of the mobile object and the motion direction of the obstacle; and obtain the repulsion coefficient based on the at least one relative motion parameter and the distance.

Optionally, for a detailed implementation process of obtaining the repulsion coefficient by the determining unit 202 based on the at least one relative motion parameter and the distance, refer to the related content of the operations 1023 and 1024 of the embodiment shown in FIG. 5, which is not described in detail herein again.

Optionally, the motion attribute information includes a type of the obstacle.

The determining unit 202 is configured to obtain the repulsion ring range coefficient of the obstacle from a correspondence between the type and the repulsion ring range coefficient based on the type.

Optionally, the planning unit 203 is configured to: determine, based on the repulsion ring coefficient, a first turning radius for the mobile object to bypass a hazardous obstacle, where the hazardous obstacle is an obstacle with which the mobile object is to collide when the mobile object continues moving in the motion state of the mobile object; and plan the traveling path for the mobile object in the first section based on the first turning radius.

Optionally, for a detailed implementation process of determining the first turning radius by the planning unit 203, refer to the related content of the operation 104 of the embodiment shown in FIG. 5, which is not described in detail herein again.

Optionally, the planning unit 203 is configured to: obtain a repulsion ring size parameter of the obstacle based on the repulsion ring range coefficient included in the repulsion ring coefficient; obtain, based on the repulsion coefficient included in the repulsion ring coefficient and the repulsion ring size parameter, a magnitude of a repulsive force and a magnitude of repulsion field potential energy produced by the obstacle to the mobile object; and determine, based on the magnitude of the repulsive force and the magnitude of the repulsion field potential energy, the first turning radius for the mobile object to bypass the hazardous obstacle.

Optionally, the mobile object is a vehicle, and the determining unit 202 is further configured to determine a minimum turning radius of the vehicle based on a velocity of the vehicle.

The planning unit 203 is configured to: determine, based on the repulsion ring coefficient, a second turning radius for the mobile object to bypass the hazardous obstacle; and when the second turning radius is greater than or equal to the minimum turning radius, determine the second turning radius as the first turning radius; or

when the second turning radius is less than the minimum turning radius, determine the minimum turning radius as the first turning radius.

Optionally, for a detailed implementation process of determining the minimum turning radius by the determining unit 202, refer to the related content of the operation 104 of the embodiment shown in FIG. 5, which is not described in detail herein again.

It should be understood that, the apparatus 200 in this embodiment of this application may be implemented by an application-specific integrated circuit (application-specific integrated circuit, ASIC) or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. When the method for path planning shown in FIG. 5 may also be implemented by software, the apparatus 200 and the modules thereof may also be software modules.

The apparatus 200 in this embodiment of this application may correspondingly perform the method described in embodiments of this application, and the above-mentioned and other operations and/or functions of the units in the apparatus 200 are respectively for implementing the corresponding procedures of the methods in FIG. 2 to FIG. 13. For brevity, details are not described herein again.

In this embodiment of this application, the obtaining unit obtains a location of an obstacle around a mobile object and motion attribute information, where the motion attribute information is used to describe an attribute and a motion state of the obstacle and a motion state of the mobile object; the determining unit determines a repulsion ring coefficient of the obstacle based on the location of the obstacle and the motion attribute information, where the repulsion ring coefficient is used to identify a hazard level of a collision between the mobile object and the obstacle; and the planning unit plans a traveling path for the mobile object in a first section based on the repulsion ring coefficient. The repulsion ring coefficient of the obstacle is obtained by the determining unit based on the location of the obstacle and the motion attribute information, and then the planning unit plans the traveling path based on the repulsion ring coefficient. Therefore, not only the location but also the motion attribute information are considered when the planning unit plans the traveling path, which makes the planned traveling path smoother, and enables smooth driving based on the planned traveling path, thereby improving driving experience.

Referring to FIG. 15, an embodiment of this application provides a schematic diagram of a controller 300 for path planning. The controller 300 may be a controller in any one of the foregoing embodiments. For example, the controller 300 is the controller in the embodiment shown in FIG. 4 or the embodiment shown in FIG. 5. The controller 300 includes at least one processor 301, a memory unit 302, a storage medium 303, a communications interface 304, and a bus system 305. The processor 301, the memory unit 302, the storage medium 303, and the communications interface 304 communicate through the bus system 305.

The processor 301 may invoke computer-executable instructions (for example, program code) stored in the memory unit 302 to implement the operation steps performed by the controller in the embodiment shown in FIG. 5. For example, a location of an obstacle around a mobile object and motion attribute information may be obtained, where the motion attribute information is used to describe an attribute and a motion state of the obstacle and a motion state of the mobile object; a repulsion ring coefficient of the obstacle is determined based on the location of the obstacle and the motion attribute information, where the repulsion ring coefficient is used to identify a hazard level of a collision between the mobile object and the obstacle; and a traveling path for the mobile object in a first section is planned based on the repulsion ring coefficient.

Optionally, the computer-executable instructions and an operating system are stored in the storage medium 303. When the controller 300 starts running, the processor 301 may load the computer-executable instructions and the operating system stored in the storage medium 303 into the memory unit 302, and invoke and run the computer-executable instructions in the memory unit 302 in an operating environment provided by the operating system.

Optionally, the foregoing processor 301 may be a CPU, a microprocessor, an application-specific integrated circuit (application-specific integrated circuit, ASIC), or one or more integrated circuits configured to control program execution in the solution of this application. In an embodiment, the processor 301 may include one or more CPUs, for example, a CPU 0 and a CPU 1 in FIG. 15. The processor 301 may also be another general-purpose processor, a digital signal processor (digital signal processing, DSP), an application-specific integrated circuit (ASIC), a field-programmable gate array (FPGA) or another programmable logic device, a discrete gate or transistor logic device, a discrete hardware component, or the like. The general-purpose processor may be a microprocessor, or may be any conventional processor or the like.

The bus system 305 in the controller 300 may further include a power bus, a control bus, a status signal bus, and the like in addition to a data bus. However, for clear description, various types of buses in the figure are marked as the bus system 305.

The communications interface 304 is configured for communication with other devices. For example, the processor 301 communicates with a sensing system and a positioning system through the communications interface 304, to obtain a location of an obstacle around a mobile object and motion attribute information.

The storage medium 303 may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example, and not limitation, RAMs in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data date SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The bus system 305 may further include a power bus, a control bus, a status signal bus, an in-vehicle bus (such as a controller area network (controller area network, CAN) bus), and the like, in addition to a data bus. However, for clear description, various types of buses in the figure are marked as the bus system 305.

It should be understood that, the controller 300 according to the embodiment of this application may correspond to the apparatus 200 in the embodiment of this application, and may correspond to the corresponding body in FIG. 5 for performing the embodiment of this application, and the above-mentioned and other operations and/or functions of the modules in the controller 300 are respectively for implementing the corresponding procedures of the methods in FIG. 2 to FIG. 13. For brevity, details are not described herein again.

This application further provides a mobile object. The mobile object may be an intelligent vehicle, an unmanned aerial vehicle, a logistics trolley or mobile robot equipped with an optical automated guided vehicle (AGV), or the like. The mobile object includes the controller shown in FIG. 15, and the controller is configured to perform the operation steps of the corresponding body in the methods in FIG. 2 to FIG. 13. For brevity, details are not described herein again.

All or some of embodiments above may be implemented by using software, hardware, firmware, or any combination thereof. When software is used to implement embodiments, all or some of embodiments may be implemented in a form of a computer program product. The computer program product includes one or more computer instructions. When the computer program instructions are loaded or executed on a computer, all or some of the procedures or functions according to embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

**Claims**

1.   A method for path planning, wherein the method comprises:

   obtaining (101) a location of an obstacle (2) around a mobile object (1) and motion attribute information, wherein the motion attribute information is used to describe an attribute and a motion state of the obstacle and a motion state of the mobile object, wherein the motion attribute information comprises a velocity, and a motion direction of the mobile object, and a velocity, a type, and a motion direction of the obstacle;
   determining (102) a repulsion ring coefficient of the obstacle based on the location of the obstacle and the motion attribute information, wherein the repulsion ring coefficient is used to identify a hazard level of a collision between the mobile object and the obstacle, comprising:

      obtaining a distance between the mobile object and the obstacle based on a location of the mobile object and the location of the obstacle;
      obtaining at least one relative motion parameter based on the motion attribute information, wherein the at least one relative motion parameter comprises a relative velocity, and an angle of the collision between the mobile object and the obstacle, and the angle of the collision is an included angle between the motion direction of the mobile object and the motion direction of the obstacle; and
      obtaining (103) a repulsion coefficient based on the at least one relative motion parameter and the distance, the repulsion coefficient comprising a repulsion velocity coefficient, the repulsion velocity coefficient is obtained based on the relative velocity and a first parameter, where the first parameter includes one or more of the distance, a magnitude of momentum of the obstacle, and the angle of the collision;

   planning (105) a traveling path for the mobile object in a first section of a global route based on the repulsion ring coefficient comprising:

      determining (104), based on the repulsion ring coefficient, a first turning radius for the mobile object to bypass the obstacle, wherein the obstacle is an obstacle with which the mobile object is to collide when the mobile object continues moving in the motion state of the mobile object, and wherein the step of determining a first turning radius comprises:

         obtaining (1031) a repulsion ring size parameter of the obstacle based on a repulsion ring range coefficient comprised in the repulsion ring coefficient, wherein the repulsion ring coefficient is used to identify the extent of impact of the obstacle on the hazard level, and the repulsion coefficient is used to identify the extent of impact of the motion state of the mobile object and the motion state of the obstacle on the hazard level, wherein the repulsion ring range coefficient of the obstacle is determined based on the type of the obstacle, the repulsion ring size parameter is obtained according to the following formula:

$$\rho_o = \left(1 + K_l\right)\left(1 + K_m\right)\rho_r$$

wherein $\rho_o$ is the repulsion ring size parameter of the obstacle, $K_l$ is a life value coefficient included in the repulsion ring range coefficient, $K_m$ is a property value coefficient included in the repulsion ring range coefficient, and $\rho_r$ is a specified repulsion ring size parameter;

obtaining (1032), based on the repulsion coefficient and the repulsion ring size parameter, a magnitude of a repulsive force and a magnitude of repulsion field potential energy produced by the obstacle to the mobile object such that the magnitude of a repulsive force and the magnitude of repulsion field potential energy are based on the velocity of the obstacle;

determining (104), based on the magnitude of the repulsive force and the magnitude of the repulsion field potential energy, the first turning radius for the mobile object to bypass the obstacle; and

planning the traveling path for the mobile object in the first section based on the first turning radius; **characterized in that**:

the motion attribute information further comprising an acceleration of the mobile object and an acceleration of the obstacle, the at least one relative motion parameter further comprising a relative acceleration, the repulsion coefficient further comprising a repulsion acceleration coefficient obtained based on the relative acceleration and a second parameter, where the second parameter includes one or more of the distance, the magnitude of the momentum of the obstacle, and the angle of the collision; the magnitude of repulsion force and the magnitude of repulsion field potential energy are further based on the acceleration of the obstacle;

wherein the magnitude of the repulsive force produced by the obstacle to the mobile object is determined according to the following formula:

$$F_{req}(q) = \begin{cases} \dfrac{\eta}{\rho^2(q,q_{obs})} \cdot \left( \dfrac{1}{\rho(q,q_{obs})} - \dfrac{1}{\rho_o} \right) + K_v v_r + K_a a_r, & \rho(q,q_{obs}) \le \rho_o \\ 0, & \rho(q,q_{obs}) > \rho_o \end{cases}$$

wherein $F_{req}(q)$ is the magnitude of the repulsive force produced by the obstacle to the mobile object, $q$ is the location of the mobile object, $q_{obs}$ is the location of the obstacle, $\rho(q,q_{obs})$ is the distance between the obstacle and the mobile object, $K_v$ is the repulsion velocity coefficient included in the repulsion coefficient, $v_r$ is the velocity of the obstacle, $K_a$ is the repulsion acceleration coefficient included in the repulsion coefficient, $a_r$ is the acceleration of the obstacle, $\eta$ is a repulsion location gain coefficient, and $\rho_0$ is the repulsion ring size parameter of the obstacle;

wherein the magnitude of the repulsion field potential energy produced by the obstacle to the mobile object is determined according to the following formula:

$$U_{req}(q) = \begin{cases} \dfrac{1}{2}\eta \left( \dfrac{1}{\rho(q,q_{obs})} - \dfrac{1}{\rho_o} \right)^2 + \dfrac{1}{2}K_v v_r^2 + \dfrac{1}{2}K_a a_r^2, & \rho(q,q_{obs}) \le \rho_o \\ 0, & \rho(q,q_{obs}) > \rho_o \end{cases}$$

wherein $U_{req}(q)$ is the magnitude of the repulsion field potential energy produced by the obstacle to the mobile object.

2. The method according to claim **1,** wherein the motion attribute information comprises a type of the obstacle; and the determining a repulsion ring range coefficient of the obstacle based on the location of the obstacle and the motion attribute information comprises:
obtaining the repulsion ring range coefficient of the obstacle from a correspondence between the type and the repulsion ring range coefficient based on the type.

3. An apparatus (200) for path planning, wherein the apparatus comprises:

an obtaining unit (201), configured to obtain a location of an obstacle (2) around a mobile object (1) and motion attribute information, wherein the motion attribute information is used to describe an attribute and a motion state of the obstacle and a motion state of the mobile object, wherein the motion attribute information comprises a velocity, and a motion direction of the mobile object, and a velocity, a type and a motion direction of the obstacle; a determining unit (202), configured to determine a repulsion ring coefficient of the obstacle based on the location of the obstacle and the motion attribute information, wherein the repulsion ring coefficient is used to identify a hazard level of a collision between the mobile object and the obstacle; the determining unit further configured to:

obtain a distance between the mobile object and the obstacle based on a location of the mobile object and the location of the obstacle;

obtain at least one relative motion parameter based on the motion attribute information, wherein the at least one relative motion parameter comprises one or more of a relative velocity, and an angle of the collision between the mobile object and the obstacle, and the angle of the collision is an included angle between the motion direction of the mobile object and the motion direction of the obstacle; and

obtain a repulsion coefficient based on the at least one relative motion parameter and the distance, the repulsion coefficient comprising a repulsion velocity coefficient, the repulsion velocity coefficient is obtained based on the relative velocity and a first parameter, where the first parameter includes one or more of the distance, a magnitude of momentum of the obstacle, and the angle of the collision; and

a planning unit (203), configured to plan a traveling path for the mobile object in a first section of a global route based on the repulsion ring coefficient, the planning unit further configured to:

determine, based on the repulsion ring coefficient, a first turning radius for the mobile object to bypass the obstacle, wherein the obstacle is an obstacle with which the mobile object is to collide when the mobile object continues moving in the motion state of the mobile object; and

obtain a repulsion ring size parameter of the obstacle based on a repulsion ring range coefficient comprised in the repulsion ring coefficient, wherein the repulsion ring range coefficient is used to identify the extent of impact of the obstacle on the hazard level, and the repulsion coefficient is used to identify the extent of impact of the motion state of the mobile object and the motion state of the obstacle on the hazard level, wherein the repulsion ring range coefficient of the obstacle is determined based on the type of the obstacle, the repulsion ring size parameter is obtained according to the following formula:

$$\rho_o = \left(1 + K_l\right)\left(1 + K_m\right)\rho_r$$

wherein $\rho_o$ is the repulsion ring size parameter of the obstacle, $K_l$ is a life value coefficient included in the repulsion ring range coefficient, $K_m$ is a property value coefficient included in the repulsion ring range coefficient, and $\rho_r$ is a specified repulsion ring size parameter;

obtain, based on the repulsion coefficient and the repulsion ring size parameter, a magnitude of a repulsive force and a magnitude of repulsion field potential energy produced by the obstacle to the mobile object such that the magnitude of a repulsive force and the magnitude of repulsion field potential energy are based on the velocity of the obstacle;

determine, based on the magnitude of the repulsive force and the magnitude of the repulsion field potential energy, the first turning radius for the mobile object to bypass the obstacle; and

plan the traveling path for the mobile object in the first section based on the first turning radius;

**characterized in that**:

the motion attribute information further comprising an acceleration of the mobile object and an acceleration of the obstacle, the at least one relative motion parameter further comprising a relative acceleration, the repulsion coefficient further comprising a repulsion acceleration coefficient obtained based on the relative acceleration and a second parameter, where the second parameter includes one or more of the distance, the magnitude of the momentum of the obstacle, and the angle of the collision; the magnitude of repulsion force and the magnitude of repulsion field potential energy are further based on the acceleration of the obstacle;

wherein the magnitude of the repulsive force produced by the obstacle to the mobile object is determined according to the following formula:

$$F_{req}(q) = \begin{cases} \dfrac{\eta}{\rho^2(q, q_{obs})} \cdot \left(\dfrac{1}{\rho(q, q_{obs})} - \dfrac{1}{\rho_o}\right) + K_v v_r + K_a a_r, & \rho(q, q_{obs}) \le \rho_o \\ 0, & \rho(q, q_{obs}) > \rho_o \end{cases}$$

wherein $F_{req}(q)$ is the magnitude of the repulsive force produced by the obstacle to the mobile object, $q$ is the location of the mobile object, $q_{obs}$ is the location of the obstacle, $\rho(q,q_{obs})$ is the distance between the obstacle and the mobile object, $K_v$ is the repulsion velocity coefficient included in the repulsion coefficient, $v_r$ is the velocity of the obstacle, $K_a$ is the repulsion acceleration coefficient included in the repulsion coefficient, $a_r$ is the acceleration of the obstacle, $\eta$ is a repulsion location gain coefficient, and $\rho_o$ is the repulsion ring size parameter of the obstacle;

wherein the magnitude of the repulsion field potential energy produced by the obstacle to the mobile object is determined according to the following formula:

$$U_{req}(q) = \begin{cases} \dfrac{1}{2}\eta\left(\dfrac{1}{\rho(q,q_{obs})} - \dfrac{1}{\rho_o}\right)^2 + \dfrac{1}{2}K_v v_r^2 + \dfrac{1}{2}K_a a_r^2, & \rho(q,q_{obs}) \le \rho_o \\ 0, & \rho(q,q_{obs}) > \rho_o \end{cases}$$

wherein $U_{req}(q)$ is the magnitude of the repulsion field potential energy produced by the obstacle to the mobile object.

4. The apparatus according to claim 3, wherein the motion attribute information comprises a type of the obstacle; and the determining unit is configured to:
obtain the repulsion ring range coefficient of the obstacle from a correspondence between the type and the repulsion ring range coefficient based on the type.

5. The apparatus according to claim 3, wherein the mobile object is a vehicle, and the determining unit is further configured to determine a minimum turning radius of the vehicle based on a velocity of the vehicle; and the planning unit is configured to:

   determine, based on the repulsion ring coefficient, a second turning radius for the mobile object to bypass the obstacle; and
   when the second turning radius is greater than or equal to the minimum turning radius, determine the second turning radius as the first turning radius; or
   when the second turning radius is less than the minimum turning radius, determine the minimum turning radius as the first turning radius.

6. A controller (11), comprising:
a processor and a memory, wherein the memory is configured to store one or more programs, and the processor is configured to execute the one or more programs, to implement operation steps of the method according to any one of claims 1 to 2.

7. A mobile object, wherein the mobile object comprises the controller according to claim 6, or the mobile object comprises the apparatus for path planning according to any one of claims 3 to 5.

**Patentansprüche**

1. Verfahren für eine Wegplanung, wobei das Verfahren umfasst:
Erhalten (101) eines Standorts eines Hindernisses (2) in der Nähe eines mobilen Objekts (1) und von Bewegungsattributinformationen, wobei die Bewegungsattributinformationen verwendet werden, um ein Attribut und einen Bewegungszustand des Hindernisses und einen Bewegungszustand des mobilen Objekts zu beschreiben, wobei die Bewegungsattributinformationen eine Geschwindigkeit und eine Bewegungsrichtung des mobilen Objekts und eine Geschwindigkeit, einen Typ und eine Bewegungsrichtung des Hindernisses umfassen; Ermitteln (102) eines Abstoßungsringkoeffizienten des Hindernisses basierend auf dem Standort des Hindernisses und den Bewegungsattributinformationen, wobei der Abstoßungsringkoeffizient verwendet wird, um eine Gefährdungsstufe für eine Kollision zwischen dem mobilen Objekt und dem Hindernis zu identifizieren, wobei das Ermitteln umfasst:

   Erhalten eines Abstands zwischen dem mobilen Objekt und dem Hindernis basierend auf einem Standort des mobilen Objekts und dem Standort des Hindernisses;

Erhalten mindestens eines relativen Bewegungsparameters basierend auf den Bewegungsattributinformationen, wobei der mindestens eine relative Bewegungsparameter eine relative Geschwindigkeit und einen Winkel der Kollision zwischen dem mobilen Objekt und dem Hindernis umfasst, und wobei der Winkel der Kollision ein eingeschlossener Winkel zwischen der Bewegungsrichtung des mobilen Objekts und der Bewegungsrichtung des Hindernisses ist; und

Erhalten (103) eines Abstoßungskoeffizienten basierend auf dem mindestens einen relativen Bewegungsparameter und dem Abstand, wobei der Abstoßungskoeffizient einen Abstoßungsgeschwindigkeitskoeffizienten umfasst, wobei der Abstoßungsgeschwindigkeitskoeffizient basierend auf der relativen Geschwindigkeit und einem ersten Parameter erhalten wird, wobei der erste Parameter einen oder mehrere von einem Abstand, einer Stärke eines Schwungs des Hindernisses und dem Winkel der Kollision beinhaltet;

Planen (105) eines Fahrwegs für das mobile Objekt in einem ersten Abschnitt einer globalen Route basierend auf dem Abstoßungsringkoeffizienten, wobei das Planen umfasst:

Ermitteln (104), basierend auf dem Abstoßungsringkoeffizienten, eines ersten Kurvenradius für das mobile Objekt, um das Hindernis zu umgehen, wobei das Hindernis ein Hindernis ist, mit dem das mobile Objekt kollidieren würde, wenn das mobile Objekt sich weiterhin in dem Bewegungszustand des mobilen Objekts bewegt, und wobei der Schritt des Ermittelns eines ersten Kurvenradius umfasst:

Erhalten (1031) eines Abstoßungsringgrößenparameters des Hindernisses basierend auf einem Abstoßungsringbereichskoeffizienten, der in dem Abstoßungsringkoeffizienten enthalten ist, wobei der Abstoßungsringkoeffizient verwendet wird, um das Ausmaß eines Zusammenpralls mit dem Hindernis auf der Gefährdungsstufe zu identifizieren, und wobei der Abstoßungskoeffizient verwendet wird, um das Ausmaß eines Zusammenpralls des Bewegungszustands des mobilen Objekts und des Bewegungszustands des Hindernisses auf der Gefährdungsstufe zu identifizieren, wobei der Abstoßungsringbereichskoeffizient des Hindernisses basierend auf dem Typ des Hindernisses ermittelt wird, wobei der Abstoßungsringgrößenparameter gemäß der folgenden Formel erhalten wird:

$$\rho_0 = (1 + K_l)(1 + K_m)\rho_r$$

wobei $\rho_0$ der Abstoßungsringgrößenparameter des Hindernisses ist, $K_l$ ein Lebenswertkoeffizient ist, der in dem Abstoßungsringbereichskoeffizienten enthalten ist, $K_m$ ein Eigenschaftswertkoeffizient ist, der in dem Abstoßungsringbereichskoeffizienten enthalten ist, $\rho_r$ ein spezifizierter Abstoßungsringgrößenparameter ist;

Erhalten (1032), basierend auf dem Abstoßungskoeffizienten und dem Abstoßungsringgrößenparameter, einer Stärke einer abstoßenden Kraft und einer Stärke einer Abstoßungsfeldpotentialenergie, die durch das Hindernis für das mobile Objekt produziert werden, sodass die Stärke einer abstoßenden Kraft und die Stärke einer Abstoßungsfeldpotentialenergie auf der Geschwindigkeit des Hindernisses basiert sind;

Ermitteln (104), basierend auf der Stärke der abstoßenden Kraft und der Stärke der Abstoßungsfeldpotentialenergie, des ersten Kurvenradius für das mobile Objekt, um das Hindernis zu umgehen; und

Planen des Fahrwegs für das mobile Objekt in dem ersten Abschnitt basierend auf dem ersten Kurvenradius;

**dadurch gekennzeichnet, dass**:

die Bewegungsattributinformationen außerdem eine Beschleunigung des mobilen Objekts und eine Beschleunigung des Hindernisses umfassen, wobei der mindestens eine relative Bewegungsparameter außerdem eine relative Beschleunigung umfasst, wobei der Abstoßungskoeffizient außerdem einen Abstoßungsbeschleunigungskoeffizienten umfasst, der basierend auf der relativen Beschleunigung und einem zweiten Parameter erhalten wird, wobei der zweite Parameter einen oder mehrere von dem Abstand, der Stärke des Schwungs des Hindernisses und dem Winkel der Kollision beinhaltet; wobei die Stärke der abstoßenden Kraft und die Stärke der Abstoßungsfeldpotentialenergie außerdem auf der Beschleunigung des Hindernisses basiert sind;

wobei die Stärke der abstoßenden Kraft, die durch das Hindernis für das mobile Objekt produziert wird, gemäß der folgenden Formel ermittelt wird:

$$F_{req}(q) = \begin{cases} \dfrac{\eta}{\rho^2(q,q_{obs})} \cdot \left( \dfrac{1}{\rho(q,q_{obs})} - \dfrac{1}{\rho_0} \right) + K_v\, v_r + K_a a_r, & \rho(q,q_{obs}) \leq \rho_0 \\ 0, & \rho(q,q_{obs}) > \rho_0 \end{cases}$$

wobei $F_{req}(q)$ die Stärke der abstoßenden Kraft ist, die durch das Hindernis für das mobile Objekt produziert wird, $q$ der Standort des mobilen Objekts ist, $q_{obs}$ der Standort des Hindernisses ist, $\rho(q, q_{obs})$ der Abstand zwischen dem Hindernis und dem mobilen Objekt ist, $K_v$ der Abstoßungsgeschwindigkeitskoeffizient ist, der in dem Abstoßungskoeffizienten enthalten ist, $v_r$ die Geschwindigkeit des Hindernisses ist, $K_a$ der Abstoßungsbeschleunigungskoeffizient ist, der in dem Abstoßungskoeffizienten enthalten ist, $a_r$ die Beschleunigung des Hindernisses ist, $\eta$ ein Abstoßungsortsverstärkungskoeffizient ist und $\rho_0$ der Abstoßungsringgrößenparameter des Hindernisses ist;

wobei die Stärke der Abstoßungsfeldpotentialenergie, die durch das Hindernis für das mobile Objekt produziert wird, gemäß der folgenden Formel ermittelt wird:

$$U_{req}(q) = \begin{cases} \frac{1}{2}\,\eta\left(\dfrac{1}{\rho(q, q_{obs})} - \dfrac{1}{\rho_0}\right)^2 + \dfrac{1}{2}K_v\,v_r^2 + \dfrac{1}{2}K_a\;a_r^2, & \rho(q, q_{obs}) \leq \rho_0 \\ 0, & \rho(q, q_{obs}) > \rho_0 \end{cases}$$

wobei $U_{req}(q)$ die Stärke der Abstoßungsfeldpotentialenergie ist, die durch das Hindernis für das mobile Objekt produziert wird.

2. Verfahren nach Anspruch 1, wobei die Bewegungsattributinformationen einen Typ des Hindernisses umfassen; und wobei das Ermitteln eines Abstoßungsringbereichskoeffizienten des Hindernisses basierend auf dem Standort des Hindernisses und den Bewegungsattributinformationen umfasst:

Erhalten des Abstoßungsringbereichskoeffizienten des Hindernisses aus einer Entsprechung zwischen dem Typ und dem auf dem Typ basierenden Abstoßungsringbereichskoeffizienten.

3. Vorrichtung (200) für eine Wegplanung, wobei die Vorrichtung umfasst:

eine Empfangseinheit (201), die konfiguriert ist zum Erhalten eines Standorts eines Hindernisses (2) in der Nähe eines mobilen Objekts (1) und von Bewegungsattributinformationen, wobei die Bewegungsattributinformationen verwendet werden, um ein Attribut und einen Bewegungszustand des Hindernisses und einen Bewegungszustand des mobilen Objekts zu beschreiben, wobei die Bewegungsattributinformationen eine Geschwindigkeit und eine Bewegungsrichtung des mobilen Objekts und eine Geschwindigkeit, einen Typ und eine Bewegungsrichtung des Hindernisses umfassen;

eine Ermittlungseinheit (202), die konfiguriert ist zum Ermitteln eines Abstoßungsringkoeffizienten des Hindernisses basierend auf dem Standort des Hindernisses und den Bewegungsattributinformationen, wobei der Abstoßungsringkoeffizient verwendet wird, um eine Gefährdungsstufe für eine Kollision zwischen dem mobilen Objekt und dem Hindernis zu identifizieren; wobei die Ermittlungseinheit außerdem konfiguriert ist zum:

Erhalten eines Abstands zwischen dem mobilen Objekt und dem Hindernis basierend auf einem Standort des mobilen Objekts und dem Standort des Hindernisses;

Erhalten mindestens eines relativen Bewegungsparameters basierend auf den Bewegungsattributinformationen, wobei der mindestens eine relative Bewegungsparameter eine oder mehrere von einer relativen Geschwindigkeit und einem Winkel der Kollision zwischen dem mobilen Objekt und dem Hindernis umfasst, und wobei der Winkel der Kollision ein eingeschlossener Winkel zwischen der Bewegungsrichtung des mobilen Objekts und der Bewegungsrichtung des Hindernisses ist; und

Erhalten eines Abstoßungskoeffizienten basierend auf dem mindestens einen relativen Bewegungsparameter und dem Abstand, wobei der Abstoßungskoeffizient einen Abstoßungsgeschwindigkeitskoeffizienten umfasst, wobei der Abstoßungsgeschwindigkeitskoeffizient basierend auf der relativen Geschwindigkeit und einem ersten Parameter erhalten wird, wobei der erste Parameter einen oder mehrere von einem Abstand, einer Stärke eines Schwungs des Hindernisses und dem Winkel der Kollision beinhaltet; und

eine Planungseinheit (203), die konfiguriert ist zum Planen eines Fahrwegs für das mobile Objekt in einem ersten Abschnitt einer globalen Route basierend auf dem Abstoßungsringkoeffizienten, wobei die Planungseinheit außerdem konfiguriert ist zum:

Ermitteln, basierend auf dem Abstoßungsringkoeffizienten, eines ersten Kurvenradius für das mobile Objekt, um das Hindernis zu umgehen, wobei das Hindernis ein Hindernis ist, mit dem das mobile Objekt kollidieren würde, wenn das mobile Objekt sich weiterhin in dem Bewegungszustand des mobilen Objekts bewegt; und

Erhalten eines Abstoßungsringgrößenparameters des Hindernisses basierend auf einem Abstoßungsringbereichskoeffizienten, der in dem Abstoßungsringkoeffizienten enthalten ist, wobei der Abstoßungsringbereichskoeffizient verwendet wird, um das Ausmaß eines Zusammenpralls mit dem Hindernis auf der Gefährdungsstufe zu identifizieren. und wobei der Abstoßungskoeffizient verwendet wird, um das Ausmaß eines Zusammenpralls des Bewegungszustands des mobilen Objekts und des Bewegungszustands des Hindernisses auf der Gefährdungsstufe zu identifizieren, wobei der Abstoßungsringbereichskoeffizient des Hindernisses basierend auf dem Typ des Hindernisses ermittelt wird, wobei der Abstoßungsringgrößenparameter gemäß der folgenden Formel erhalten wird:

$$\rho_0 = (1 + K_l)(1 + K_m)\rho_r$$

wobei $\rho_0$ der Abstoßungsringgrößenparameter des Hindernisses ist, $K_l$ ein Lebenswertkoeffizient ist, der in dem Abstoßungsringbereichskoeffizienten enthalten ist, $K_m$ ein Eigenschaftswertkoeffizient ist, der in dem Abstoßungsringbereichskoeffizienten enthalten ist, $\rho_r$ ein spezifizierter Abstoßungsringgrößenparameter ist;

Erhalten, basierend auf dem Abstoßungskoeffizienten und dem Abstoßungsringgrößenparameter, einer Stärke einer abstoßenden Kraft und einer Stärke einer Abstoßungsfeldpotentialenergie, die durch das Hindernis für das mobile Objekt produziert werden, sodass die Stärke einer abstoßenden Kraft und die Stärke einer Abstoßungsfeldpotentialenergie auf der Geschwindigkeit des Hindernisses basiert sind;

Ermitteln, basierend auf der Stärke der abstoßenden Kraft und der Stärke der Abstoßungsfeldpotentialenergie, des ersten Kurvenradius für das mobile Objekt, um das Hindernis zu umgehen; und

Planen des Fahrwegs für das mobile Objekt in dem ersten Abschnitt basierend auf dem ersten Kurvenradius;

**dadurch gekennzeichnet, dass**:

die Bewegungsattributinformationen außerdem eine Beschleunigung des mobilen Objekts und eine Beschleunigung des Hindernisses umfassen, wobei der mindestens eine relative Bewegungsparameter außerdem eine relative Beschleunigung umfasst, wobei der Abstoßungskoeffizient außerdem einen Abstoßungsbeschleunigungskoeffizienten umfasst, der basierend auf der relativen Beschleunigung und einem zweiten Parameter erhalten wird, wobei der zweite Parameter einen oder mehrere von dem Abstand, der Stärke des Schwungs des Hindernisses und dem Winkel der Kollision beinhaltet; wobei die Stärke der abstoßenden Kraft und die Stärke der Abstoßungsfeldpotentialenergie außerdem auf der Beschleunigung des Hindernisses basiert sind;

wobei die Stärke der abstoßenden Kraft, die durch das Hindernis für das mobile Objekt produziert wird, gemäß der folgenden Formel ermittelt wird:

$$F_{req}(q) = \begin{cases} \dfrac{\eta}{\rho^2(q, q_{obs})} \cdot \left(\dfrac{1}{\rho(q, q_{obs})} - \dfrac{1}{\rho_0}\right) + K_v\, v_r + K_a a_r, & \rho(q, q_{obs}) \leq \rho_0 \\ 0, & \rho(q, q_{obs}) > \rho_0 \end{cases}$$

wobei $F_{req}(q)$ die Stärke der abstoßenden Kraft ist, die durch das Hindernis für das mobile Objekt produziert wird, $q$ der Standort des mobilen Objekts ist, $q_{obs}$ der Standort des Hindernisses ist, $\rho(q, q_{obs})$ der Abstand zwischen dem Hindernis und dem mobilen Objekt ist, $K_v$ der Abstoßungsgeschwindigkeitskoeffizient ist, der in dem Abstoßungskoeffizienten enthalten ist, $v_r$ die Geschwindigkeit des Hindernisses ist, $K_a$ der Abstoßungsbeschleunigungskoeffizient ist, der in dem Abstoßungskoeffizienten enthalten ist, $a_r$ die Beschleunigung des Hindernisses ist, $\eta$ ein Abstoßungsortsverstärkungskoeffizient ist und $\rho_0$ der Abstoßungsringgrößenparameter des Hindernisses ist;

wobei die Stärke der Abstoßungsfeldpotentialenergie, die durch das Hindernis für das mobile Objekt produziert wird, gemäß der folgenden Formel ermittelt wird:

$$U_{req}(q) = \begin{cases} \dfrac{1}{2}\,\eta\left(\dfrac{1}{\rho(q, q_{obs})} - \dfrac{1}{\rho_0}\right)^2 + \dfrac{1}{2}K_v\, v_r^2 + \dfrac{1}{2}K_a\ a_r^2, & \rho(q, q_{obs}) \leq \rho_0 \\ 0, & \rho(q, q_{obs}) > \rho_0 \end{cases}$$

wobei $U_{req}(q)$ die Stärke der Abstoßungsfeldpotentialenergie ist, die durch das Hindernis für das mobile Objekt produziert wird.

**4.** Vorrichtung nach Anspruch 3, wobei die Bewegungsattributinformationen einen Typ des Hindernisses umfassen; und wobei die Ermittlungseinheit konfiguriert ist zum:

Erhalten des Abstoßungsringbereichskoeffizienten des Hindernisses aus einer Entsprechung zwischen dem Typ und dem auf dem Typ basierenden Abstoßungsringbereichskoeffizienten.

**5.** Vorrichtung nach Anspruch 3, wobei das mobile Objekt ein Fahrzeug ist, und wobei die Ermittlungseinheit außerdem konfiguriert ist zum Ermitteln eines minimalen Kurvenradius des Fahrzeugs basierend auf einer Geschwindigkeit des Fahrzeugs; und wobei die Planungseinheit konfiguriert ist zum:

Ermitteln, basierend auf dem Abstoßungsringkoeffizienten, eines zweiten Kurvenradius für das mobile Objekt, um das Hindernis zu umgehen; und
wenn der zweite Kurvenradius größer als oder gleich wie der minimale Kurvenradius ist, Ermitteln des zweiten Kurvenradius als den ersten Kurvenradius; oder
wenn der zweite Kurvenradius kleiner als der minimale Kurvenradius ist, Ermitteln des minimalen Kurvenradius als den ersten Kurvenradius.

**6.** Steuereinheit (11), umfassend:

einen Prozessor und einen Speicher, wobei der Speicher konfiguriert ist zum Speichern eines oder mehrerer Programme, und wobei der Prozessor konfiguriert ist zum Ausführen des einen oder der mehreren Programme, um Operationsschritte des Verfahrens nach einem der Ansprüche 1 bis 2 zu implementieren.

**7.** Mobiles Objekt, wobei das mobile Objekt die Steuereinheit nach Anspruch 6 umfasst oder wobei das mobile Objekt die Vorrichtung für eine Wegplanung nach einem der Ansprüche 3 bis 5 umfasst.

**Revendications**

**1.** Procédé de planification de trajet, dans lequel le procédé comprend :

l'obtention (101) d'une localisation d'un obstacle (2) au voisinage d'un objet mobile (1) et d'une information d'attribut de mouvement, dans lequel l'information d'attribut de mouvement est utilisée pour décrire un attribut et un état de mouvement de l'obstacle et un état de mouvement de l'objet mobile, dans lequel l'information d'attribut de mouvement comprend une vitesse et une direction de mouvement de l'objet mobile et une vitesse, un type et une direction de mouvement de l'obstacle ;
la détermination (102) d'un coefficient d'anneau de répulsion de l'obstacle sur la base de la localisation de l'obstacle et de l'information d'attribut de mouvement, dans lequel le coefficient d'anneau de répulsion est utilisé pour identifier un niveau de risque d'une collision entre l'objet mobile et l'obstacle, comprenant :

l'obtention d'une distance entre l'objet mobile et l'obstacle sur la base d'une localisation de l'objet mobile et de la localisation de l'obstacle ;
l'obtention d'au moins un paramètre de mouvement relatif sur la base de l'information d'attribut de mouvement, dans lequel l'au moins un paramètre de mouvement relatif comprend une vitesse relative et un angle de la collision entre l'objet mobile et l'obstacle, et l'angle de la collision est un angle inclus entre la direction de mouvement de l'objet mobile et la direction de mouvement de l'obstacle ; et
l'obtention (103) d'un coefficient de répulsion sur la base de l'au moins un paramètre de mouvement relatif et de la distance, le coefficient de répulsion comprenant un coefficient de vitesse de répulsion, le coefficient de vitesse de répulsion est obtenu sur la base de la vitesse relative et d'un premier paramètre, dans lequel le premier paramètre inclut un ou plusieurs paramètres parmi la distance, une amplitude de mouvement de l'obstacle et l'angle de la collision ;
la planification (105) d'un trajet de déplacement pour l'objet mobile dans une première section d'un parcours global sur la base du coefficient d'anneau de répulsion comprenant :
la détermination (104), sur la base du coefficient d'anneau de répulsion, d'un premier rayon de braquage pour que l'objet mobile contourne l'obstacle, dans lequel l'obstacle est un obstacle avec lequel l'objet mobile est destiné à entrer en collision lorsque l'objet mobile continue de se déplacer dans l'état de mouvement de l'objet mobile, et dans lequel l'étape de détermination d'un premier rayon de braquage comprend :

l'obtention (1031) d'un paramètre de dimension d'anneau de répulsion de l'obstacle sur la base d'un coefficient de plage d'anneau de répulsion compris dans le coefficient d'anneau de répulsion, dans lequel le coefficient d'anneau de répulsion est utilisé pour identifier l'étendue d'impact de l'obstacle sur le niveau de risque, et le coefficient de répulsion est utilisé pour identifier l'étendue d'impact de l'état de mouvement de l'objet mobile et de l'état de mouvement de l'obstacle sur le niveau de risque, dans lequel le coefficient de plage d'anneau de répulsion de l'obstacle est déterminé sur la base du type de l'obstacle, et le paramètre de dimension d'anneau de répulsion est obtenu conformément à la formule suivante :

$$\rho_0 = \left(1 + K_l\right)\left(1 - K_m\right)\rho_r$$

dans laquelle $\rho_0$ est le paramètre de dimension d'anneau de répulsion de l'obstacle, $K_l$ est un coefficient de valeur de vie inclus dans le coefficient de plage d'anneau de répulsion, $K_m$ est un coefficient de valeur de propriété inclus dans le coefficient de plage d'anneau de répulsion et $\rho_r$ est un paramètre de dimension d'anneau de répulsion spécifié ;

l'obtention (1032), sur la base du coefficient de répulsion et du paramètre de dimension d'anneau de répulsion, d'une amplitude d'une force de répulsion et d'une amplitude d'énergie potentielle de champ de répulsion produites par l'obstacle sur l'objet mobile de telle sorte que l'amplitude d'une force de répulsion et l'amplitude d'énergie potentielle de champ de répulsion soient basées sur la vitesse de l'obstacle ;

la détermination (104), sur la base de l'amplitude de la force de répulsion et de l'amplitude de l'énergie potentielle de champ de répulsion, du premier rayon de braquage pour que l'objet mobile contourne l'obstacle ; et

la planification du trajet de déplacement pour l'objet mobile dans la première section sur la base du premier rayon de braquage ;

**caractérisé en ce que** :

l'information d'attribut de mouvement comprenant en outre une accélération de l'objet mobile et une accélération de l'obstacle, l'au moins un paramètre de mouvement relatif comprenant en outre une accélération relative, le coefficient de répulsion comprenant en outre un coefficient d'accélération de répulsion qui est obtenu sur la base de l'accélération relative et d'un second paramètre, dans lequel le second paramètre inclut un ou plusieurs paramètres parmi la distance, l'amplitude du mouvement de l'obstacle, et l'angle de la collision ; l'amplitude de force de répulsion et l'amplitude d'énergie potentielle de champ de répulsion sont en outre basées sur l'accélération de l'obstacle ; dans lequel l'amplitude de la force de répulsion produite par l'obstacle sur l'objet mobile est déterminée conformément à la formule suivante :

$$F_{req}(q) = \left| \frac{\eta}{\rho^2(q, q_{obs})} \cdot \left( \frac{1}{\rho(q, q_{obs})} - \frac{1}{\rho_0} \right) \cdot K_v v_r \cdot K_a a_r, \quad \rho(q, q_{obs}) \le \rho_0 \right.$$
$$\left. 0, \quad \rho(q, q_{obs}) > \rho_0 \right.$$

dans laquelle $F_{req}(q)$ est l'amplitude de la force de répulsion produite par l'obstacle sur l'objet mobile, $q$ est la localisation de l'objet mobile, $q_{obs}$ est la localisation de l'obstacle, $\rho(q, q_{obs})$ est la distance entre l'obstacle et l'objet mobile, $K_v$ est le coefficient de vitesse de répulsion inclus dans le coefficient de répulsion, $v_r$ est la vitesse de l'obstacle, $K_a$ est le coefficient d'accélération de répulsion inclus dans le coefficient de répulsion, $a_r$ est l'accélération de l'obstacle, $\eta$ est un coefficient de gain de localisation de répulsion et $\rho_0$ est le paramètre de dimension d'anneau de répulsion de l'obstacle ;

dans lequel l'amplitude de l'énergie potentielle de champ de répulsion produite par l'obstacle sur l'objet mobile est déterminée conformément à la formule suivante :

$$U_{req}(q) = \frac{1}{2}\eta\left( \frac{1}{\rho(q, q_{obs})} - \frac{1}{\rho_0} \right)^2 + \frac{1}{2}K_v v_r^2 + \frac{1}{2}K_a a_r^2, \quad \rho(q, q_{obs}) \le \rho_0$$
$$0, \quad \rho(q, q_{obs}) > \rho_0$$

dans laquelle $U_{req}(q)$ est l'amplitude de l'énergie potentielle de champ de répulsion produite par l'obstacle sur l'objet mobile.

2. Procédé selon la revendication 1, dans lequel l'information d'attribut de mouvement comprend un type de l'obstacle ; et
la détermination d'un coefficient de plage d'anneau de répulsion de l'obstacle sur la base de la localisation de l'obstacle et de l'information d'attribut de mouvement comprend :
l'obtention du coefficient de plage d'anneau de répulsion de l'obstacle à partir d'une correspondance entre le type et le coefficient de plage d'anneau de répulsion sur la base du type.

3. Appareil (200) de planification de trajet, dans lequel l'appareil comprend :

une unité d'obtention (201), configurée pour obtenir une localisation d'un obstacle (2) au voisinage d'un objet mobile (1) et une information d'attribut de mouvement, dans lequel l'information d'attribut de mouvement est utilisée pour décrire un attribut et un état de mouvement de l'obstacle et un état de mouvement de l'objet mobile, dans lequel l'information d'attribut de mouvement comprend une vitesse et une direction de mouvement de l'objet mobile et une vitesse, un type et une direction de mouvement de l'obstacle ;
une unité de détermination (202), configurée pour déterminer un coefficient d'anneau de répulsion de l'obstacle sur la base de la localisation de l'obstacle et de l'information d'attribut de mouvement, dans lequel le coefficient d'anneau de répulsion est utilisé pour identifier un niveau de risque d'une collision entre l'objet mobile et l'obstacle ; l'unité de détermination étant en outre configurée pour :

obtenir une distance entre l'objet mobile et l'obstacle sur la base d'une localisation de l'objet mobile et de la localisation de l'obstacle ;
obtenir au moins un paramètre de mouvement relatif sur la base de l'information d'attribut de mouvement, dans lequel l'au moins un paramètre de mouvement relatif comprend un ou plusieurs paramètres parmi une vitesse relative et un angle de la collision entre l'objet mobile et l'obstacle, et l'angle de la collision est un angle inclus entre la direction de mouvement de l'objet mobile et la direction de mouvement de l'obstacle ; et
obtenir un coefficient de répulsion sur la base de l'au moins un paramètre de mouvement relatif et de la distance, le coefficient de répulsion comprenant un coefficient de vitesse de répulsion, le coefficient de vitesse de répulsion est obtenu sur la base de la vitesse relative et d'un premier paramètre, dans lequel le premier paramètre inclut un ou plusieurs paramètres parmi la distance, une amplitude de mouvement de l'obstacle et l'angle de la collision ; et

une unité de planification (203), configurée pour planifier un trajet de déplacement pour l'objet mobile dans une première section d'un parcours global sur la base du coefficient d'anneau de répulsion, l'unité de planification étant en outre configurée pour :

déterminer, sur la base du coefficient d'anneau de répulsion, un premier rayon de braquage pour que l'objet mobile contourne l'obstacle, dans lequel l'obstacle est un obstacle avec lequel l'objet mobile est destiné à entrer en collision lorsque l'objet mobile continue de se déplacer dans l'état de mouvement de l'objet mobile ; et
obtenir un paramètre de dimension d'anneau de répulsion de l'obstacle sur la base d'un coefficient de plage d'anneau de répulsion compris dans le coefficient d'anneau de répulsion, dans lequel le coefficient de plage d'anneau de répulsion est utilisé pour identifier l'étendue d'impact de l'obstacle sur le niveau de risque, et le coefficient de répulsion est utilisé pour identifier l'étendue d'impact de l'état de mouvement de l'objet mobile et de l'état de mouvement de l'obstacle sur le niveau de risque, dans lequel le coefficient de plage d'anneau de répulsion de l'obstacle est déterminé sur la base du type de l'obstacle, et le paramètre de dimension d'anneau de répulsion est obtenu conformément à la formule suivante :

$$\rho_0 = (1 + K_l)(1 - K_m)\rho_r$$

dans laquelle $\rho_0$ est le paramètre de dimension d'anneau de répulsion de l'obstacle, $K_l$ est un coefficient de valeur de vie inclus dans le coefficient de plage d'anneau de répulsion, $K_m$ est un coefficient de valeur de propriété inclus dans le coefficient de plage d'anneau de répulsion et $\rho_r$ est un paramètre de dimension d'anneau de répulsion spécifié ;
obtenir, sur la base du coefficient de répulsion et du paramètre de dimension d'anneau de répulsion, une amplitude d'une force de répulsion et une amplitude d'énergie potentielle de champ de répulsion produites par l'obstacle sur l'objet mobile de telle sorte que l'amplitude d'une force de répulsion et l'amplitude d'énergie potentielle de champ de répulsion soient basées sur la vitesse de l'obstacle ; déterminer, sur la base de l'amplitude de la force de répulsion et de l'amplitude de l'énergie potentielle de champ de répulsion, un premier rayon de braquage pour que l'objet mobile contourne l'obstacle ; et planifier le trajet de déplacement pour l'objet mobile dans la première section sur la base du premier rayon de braquage ;

**caractérisé en ce que** :

l'information d'attribut de mouvement comprenant en outre une accélération de l'objet mobile et une accélération de l'obstacle, l'au moins un paramètre de mouvement relatif comprenant en outre une accélération relative, le coefficient de répulsion comprenant en outre un coefficient d'accélération de répulsion qui est obtenu sur la base de l'accélération relative et d'un second paramètre, dans lequel le second paramètre inclut un ou plusieurs paramètres parmi la distance, l'amplitude du mouvement de l'obstacle, et l'angle de la collision ; l'amplitude de force de répulsion et l'amplitude d'énergie potentielle de champ de répulsion sont en outre basées sur l'accélération de l'obstacle ; dans lequel l'amplitude de la force de répulsion produite par l'obstacle sur l'objet mobile est déterminée conformément à la formule suivante :

$$F_{req}(q) = \left| \frac{\eta}{\rho^2(q, q_{obs})} \cdot \left( \frac{1}{\rho(q, q_{obs})} - \frac{1}{\rho_0} \right) \cdot K_v v_r \cdot K_a a_r, \quad \rho(q, q_{obs}) \leq \rho_0 \right.$$
$$\left. 0, \quad \rho(q, q_{obs}) > \rho_0 \right.$$

dans laquelle $F_{req}(q)$ est l'amplitude de la force de répulsion produite par l'obstacle sur l'objet mobile, $q$ est la localisation de l'objet mobile, $q_{obs}$ est la localisation de l'obstacle, $\rho(q, q_{obs})$ est la distance entre l'obstacle et l'objet mobile, $Kv$ est le coefficient de vitesse de répulsion inclus dans le coefficient de répulsion, $v_r$ est la vitesse de l'obstacle, $K_a$ est le coefficient d'accélération de répulsion inclus dans le coefficient de répulsion, $a_r$ est l'accélération de l'obstacle, $\eta$ est un coefficient de gain de localisation de répulsion *et* $\rho_0$ est le paramètre de dimension d'anneau de répulsion de l'obstacle ;

dans lequel l'amplitude de l'énergie potentielle de champ de répulsion produite par l'obstacle sur l'objet mobile est déterminée conformément à la formule suivante :

$$U_{req}(q) = \frac{1}{2} \eta \left( \frac{1}{\rho(q, q_{obs})} - \frac{1}{\rho_0} \right)^2 + \frac{1}{2} K_v v_r^2 + \frac{1}{2} K_a a_r^2, \quad \rho(q, q_{obs}) \leq \rho_0$$
$$0, \quad \rho(q, q_{obs}) > \rho_0$$

dans laquelle $U_{req}(q)$ est l'amplitude de l'énergie potentielle de champ de répulsion produite par l'obstacle sur l'objet mobile.

4. Appareil selon la revendication 3, dans lequel l'information d'attribut de mouvement comprend un type de l'obstacle ; et
l'unité de détermination est configurée pour :
obtenir le coefficient de plage d'anneau de répulsion de l'obstacle à partir d'une correspondance entre le type et le coefficient de plage d'anneau de répulsion sur la base du type.

5. Appareil selon la revendication 3, dans lequel l'objet mobile est un véhicule, et l'unité de détermination est en outre configurée pour déterminer un rayon de braquage minimum du véhicule sur la base d'une vitesse du véhicule ; et
l'unité de planification est configurée pour :

déterminer, sur la base du coefficient d'anneau de répulsion, un second rayon de braquage pour que l'objet mobile contourne l'obstacle ; et
lorsque le second rayon de braquage est supérieur ou égal au rayon de braquage minimum, déterminer le second rayon de braquage en tant que premier rayon de braquage ; ou
lorsque le second rayon de braquage est inférieur au rayon de braquage minimum, déterminer le rayon de braquage minimum en tant que premier rayon de braquage.

**6.** Contrôleur (11), comprenant :
un processeur et une mémoire, dans lequel la mémoire est configurée pour stocker un ou plusieurs programmes, et le processeur est configuré pour exécuter les un ou plusieurs programmes pour mettre en œuvre les étapes opératoires du procédé selon l'une quelconque des revendications 1 et 2.

**7.** Objet mobile, dans lequel l'objet mobile comprend le contrôleur selon la revendication 6, ou l'objet mobile comprend l'appareil de planification de trajet selon l'une quelconque des revendications 3 à 5.

Repulsion ring

Obstacle

Mobile
object

Repulsion $F_{req}$

Repulsion ring radius $\rho_0$

FIG. 1

3

4

2

1

5

FIG. 2

Target location

Obstacle

$F_{att}$

Mobile object

$F_{req}$

$F_{total}$

$\rho_0$    Gravity: $F_{att}$

$F_{req}$    Resultant force: $F_{total}$

FIG. 3

```
                    ┌─────────────────────────────┐
                    │         ┌──────────────┐     │
                    │         │   Sensing    │     │      1
                    │      ┌──│  system 12   │     │     ╱
                    │      │  └──────────────┘     │   ╱
                    │ ┌────────┐                   │ ╱
                    │ │Controller 11│              │╱
                    │ └────────┘                   │
                    │      │  ┌──────────────┐     │
                    │      └──│ Positioning  │     │
                    │         │  system 13   │     │
                    │         └──────────────┘     │
                    └─────────────────────────────┘
```

FIG. 4

Obtain a location of a mobile object and a location of an obstacle around the mobile object, and obtain motion attribute information, where the motion attribute information is used to describe an attribute and a motion state of the obstacle and a motion state of the mobile object    — 101

Obtain a repulsion ring coefficient of a target obstacle based on the location of the mobile object, a location of the target obstacle, and the motion attribute information, where the repulsion ring coefficient is used to identify a risk level of a collision between the mobile object and the target obstacle, and the target obstacle is any obstacle around the mobile object    — 102

Obtain, based on the repulsion ring coefficient of the target obstacle, a magnitude of a repulsive force and a magnitude of repulsion field potential energy produced by the target obstacle to the mobile object    — 103

Determine, based on a magnitude of a repulsive force and a magnitude of repulsion field potential energy produced by each of M obstacles to the mobile object, a first turning radius for bypassing a hazardous obstacle, where the hazardous obstacle is one or more of the M obstacles    — 104

Plan a traveling path for the mobile object in a first section based on the first turning radius    — 105

FIG. 5

FIG. 6

FIG. 7

| Distance hazard level | Velocity hazard level | | | | | Momentum hazard level |
|---|---|---|---|---|---|---|
| | Low | Medium-low | Medium | Medium-high | High | |
| Low | Low | Low | Low | Medium-low | Medium-low | Low |
| Medium | Low | Low | Medium-low | Medium-low | Medium-low | |
| High | Low | Low | Medium-low | Medium-low | Medium | |
| Low | Low | Medium-low | Medium-low | Medium | Medium | Medium |
| Medium | Medium-low | Medium-low | Medium | Medium | Medium-high | |
| High | Medium-low | Medium | Medium | Medium-high | Medium-high | |
| Low | Medium-low | Medium | Medium | Medium-high | Medium-high | High |
| Medium | Medium | Medium | Medium-high | Medium-high | High | |
| High | Medium | Medium-high | Medium-high | High | High | |

First overall level

FIG. 8

EP 4 120 041 B1

| First overall level / Angle hazard level | Low | Medium-low | Medium | Medium-high | High |
|---|---|---|---|---|---|
| Low | Low | Medium-low | Medium-low | Medium-low | Medium-low |
| Medium-low | Medium-low | Medium-low | Medium-low | Medium-low | Medium |
| Medium | Medium-low | Medium-low | Medium | Medium-high | Medium-high |
| Medium-high | Medium | Medium | Medium-high | Medium-high | Medium-high |
| High | Medium | Medium | Medium-high | Medium-high | High |

Repulsion velocity coefficient level

FIG. 9

| Distance hazard level | Acceleration hazard level | | | | | Momentum hazard level |
|---|---|---|---|---|---|---|
| | Low | Medium-low | Medium | Medium-high | High | |
| Low | Low | Low | Low | Medium-low | Medium-low | Low |
| Medium | Low | Low | Medium-low | Medium-low | Medium-low | |
| High | Low | Low | Medium-low | Medium-low | Medium | |
| Low | Low | Medium-low | Medium-low | Medium | Medium | Medium |
| Medium | Medium-low | Medium-low | Medium | Medium | Medium-high | |
| High | Medium-low | Medium | Medium | Medium-high | Medium-high | |
| Low | Medium-low | Medium | Medium | Medium-high | Medium-high | High |
| Medium | Medium | Medium | Medium-high | Medium-high | High | |
| High | Medium | Medium-high | Medium-high | High | High | |

Second overall level

FIG. 10

EP 4 120 041 B1

| Angle hazard level \ Second overall level | Low | Medium-low | Medium | Medium-high | High |
|---|---|---|---|---|---|
| Low | Low | Medium-low | Medium-low | Medium-low | Medium-low |
| Medium-low | Medium-low | Medium-low | Medium-low | Medium-low | Medium |
| Medium | Medium-low | Medium-low | Medium | Medium-high | Medium-high |
| Medium-high | Medium | Medium | Medium-high | Medium-high | Medium-high |
| High | Medium | Medium | Medium-high | Medium-high | High |

Repulsion acceleration coefficient level

FIG. 11

22

Current motion direction

21

1

23

FIG. 12

22

Current motion direction

21

1

23

FIG. 13

**200**

**Obtaining unit** — 201

**Determining unit** — 202

**Planning unit** — 203

FIG. 14

Controller 300 — 1301

**Processor**

CPU 0

CPU 1

— 1305

— 1303

**Storage medium**

— 1304

**Communications interface**

— 1303

**Memory unit**

Operating system

Program code

FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Fast 3D Collision Avoidance Algorithm for Fixed Wing UAS. **LIN ZIJIE et al.** JOURNAL OF INTELLIGENT. SPRINGER NETHERLANDS, 29 June 2019, vol. 97, 577-604
- Intelligent Vehicle Path Planning Based on Improved Artificial Potential Field Algorithm. **GU XINPING et al.** 2019 INTERNATIONAL CONFERENCE ON HIGH PERFORMANCE BIG DATA AND INTELLIGENT SYSTEMS (HPBD&IS). IEEE, 09 May 2019, 104-109

- Research on Control Method and Evaluation System of Ground Unmanned Vehicle Formation Transform. **TIANYU SHI et al.** ARXIVORG. CORNELL UNIVERSITY LIBRARY